# EUROPEAN PATENT APPLICATION

(11) **EP 4 697 649 A1**
(43) Date of publication of application: **18.02.2026**
(21) Application number: 24806463.6
(22) Date of filing: 10.05.2024
(51) Int. Cl.: H04L 9/40, H04W 24/02, H04L 61/4588, H04L 61/103

(54) **COMMUNICATION METHOD AND COMMUNICATION APPARATUS**

(30) Priority: 14.05.2023 CN 202310541737
(71) Applicant: Huawei Technologies Co., Ltd., Shenzhen, Guangdong 518129 (CN)
(72) Inventor: WU, Yizhuang, Shenzhen, Guangdong 518129 (CN)
(74) Representative: MERH-IP Matias Erny Reichl Hoffmann Patentanwälte PartG mbB
(86) International application number: PCT/CN2024/092241
(87) International publication number: WO 2024/235111

(57) **Abstract**

A communication method is provided. The method includes: An EES receives, from a terminal device, a first request message for obtaining an identifier of the terminal device, where the first request message includes a private IP address of the terminal device; the EES obtains a public IP address and a port number of the terminal device and sends, to an NEF, a second request message used to request the identifier of the terminal device, where the second request message includes the private IP address, and the public IP address and the port number of the terminal device; and the EES receives a response message from the NEF, where the response message includes the identifier of the terminal device, or the response message indicates that the obtaining fails. The public IP address and the port number of the terminal device are carried in the request message, so that a network side verifies, based on the public IP address and the port number, accuracy of the private IP address provided by the terminal device. In this way, the terminal device does not use a private IP address of another terminal device to obtain an identifier of the another terminal device, and security is improved.

## Description

This application claims priority to Chinese Patent Application No. 202310541737.3, filed with the China National Intellectual Property Administration on May 14, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

To enable edge applications on a 3rd generation partnership project (3rd Generation Partnership Project, 3GPP) network, architectures, procedures, and information flows for enabling the edge applications are defined. Specifically, to obtain an identifier that uniquely identifies a terminal device, an edge enabler server (Edge Enabler Server, EES) in the architectures for enabling the edge applications exposes a terminal device identifier application programming interface (Application programming interface, API) to an edge application server (Edge Application Server, EAS) and an edge enabler client (Edge Enabler Client, EEC). The terminal device identifier API is used by the EAS or the EEC to obtain the identifier of the terminal device from the EES.

For example, that the EEC invokes the terminal device identifier API may be used in the following scenario: When the EAS directly invokes the terminal device identifier API from the EES, and fails to obtain the identifier of the terminal device, the EAS may choose to send signaling to an application client (Application client, AC), to cause the AC to initiate terminal device identifier query to the EEC. Further, the EEC invokes the terminal device identifier API of the EES by using an internet protocol (Internet Protocol, IP) address allocated by a core network, to obtain the identifier of the terminal device, and sends, via the AC, the obtained identifier of the terminal device to the EAS.

However, how to improve security of obtaining, by the EAS, the identifier of the terminal device via the EEC becomes an urgent problem to be resolved.

### SUMMARY

This application provides a communication method and a communication apparatus, to improve security of obtaining an identifier of a terminal device by an EEC.

According to a first aspect, this application provides a communication method. The method may be performed by an edge enabler server, or may be performed by a component (for example, a chip or a circuit) of the edge enabler server. This is not limited in this application.

The communication method includes: receiving a first request message from a terminal device, where the first request message is used to obtain an identifier of the terminal device, and the first request message includes a first private address of the terminal device; obtaining a public address and a port number of the terminal device, and sending a second request message to a network exposure function network element, where the second request message is used to obtain the identifier of the terminal device, and the second request message includes the first private address, the public address, and the port number; and receiving first indication information or the identifier of the terminal device from the network exposure function network element, where the first indication information indicates failing to obtain the identifier of the terminal device.

Based on the foregoing solution, after receiving the request message that is for obtaining the identifier of the terminal device from the terminal device, the edge enabler server carries, in the request message that is for obtaining the identifier of the terminal device and that is sent to the network exposure function network element, the first private address received from the terminal device, and the obtained public address and port number. In this way, the network exposure function network element can determine, based on the received public address and port number, whether the first private address provided by the terminal device is accurate, so as to determine whether to provide the identifier of the terminal device to the terminal device, thereby avoiding still providing the identifier of the terminal device to the terminal device when the first private address provided by the terminal device is inaccurate, and improving security of obtaining the identifier of the terminal device by the terminal device.

With reference to the first aspect, in some implementations of the first aspect, receiving the first request message from the terminal device includes: receiving an internet protocol IP data packet from a user plane function network element, where a payload part of the IP data packet includes the first request message from the terminal device; and
obtaining the public address and the port number includes: determining the public address and the port number based on a source address and a source port number of the IP data packet, where the source address represents the public address, and the source port number represents the port number.

For example, obtaining the public address and the port number further includes: obtaining the public address and the port number from an edge application server.

Based on the foregoing solution, the edge enabler server may obtain the required public address and the required port number in different manners, thereby improving the flexibility of the solution and meeting different application scenarios.

With reference to the first aspect, in some implementations of the first aspect, when the first indication information for the terminal device is received from the network exposure function network element, the method further includes: receiving a cause value for the terminal device from the network exposure function network element, where the cause value indicates a cause for failing to obtain the identifier of the terminal device. The first indication information and the cause value may be carried in a second response message.

Based on the foregoing solution, when the second response message indicates failing to obtain the identifier of the terminal device, the cause value may be carried in a first response message to indicate the cause for failing to obtain the identifier of the terminal device, so that the edge enabler server correctly processes a request of an EEC based on the cause value.

With reference to the first aspect, in some implementations of the first aspect, when the identifier of the terminal device is received from the network exposure function network element, the method further includes: sending a first response message to the terminal device, where the first response message includes the identifier of the terminal device.

With reference to the first aspect, in some implementations of the first aspect, sending the second request message to the network exposure function network element includes: when the terminal device is not authenticated, sending the second request message to the network exposure function network element.

According to a second aspect, this application provides a communication method. The method may be performed by a network exposure function network element, or may be performed by a component (for example, a chip or a circuit) of the network exposure function network element. This is not limited in this application.

The communication method includes: receiving a second request message from an edge enabler server, where the second request message is used to obtain an identifier of a terminal device, and the second request message includes a first private address of the terminal device, and a public address and a port number of the terminal device; and when determining, based on the public address and the port number, that the first private address is valid, obtaining the identifier of the terminal device, and sending the identifier of the terminal device to the edge enabler server.

Based on the foregoing solution, the request message that is for obtaining the identifier of the terminal device and that is sent by the edge enabler server to the network exposure function network element carries the first private address received from the terminal device, and the public address and the port number that are obtained by the edge enabler server. In this way, the network exposure function network element can determine, based on the received public address and port number, whether the first private address provided by the terminal device is accurate, so as to determine whether to provide the identifier of the terminal device to the terminal device, thereby avoiding still providing the identifier of the terminal device to the terminal device when the first private address provided by the terminal device is inaccurate, and improving security of obtaining the identifier of the terminal device by the terminal device.

With reference to the second aspect, in some implementations of the second aspect, when determining, based on the public address and the port number, that the first private address is invalid, first indication information is sent to the edge enable server, where the first indication information indicates failing to obtain the identifier of the terminal device.

With reference to the second aspect, in some implementations of the second aspect, the method further includes: determining, based on the public address and the port number, whether the first private address is valid.

With reference to the second aspect, in some implementations of the second aspect, determining, based on the public address and the port number, whether the first private address is valid includes: determining whether the first private address is the same as a second private address, where the second private address is determined based on the public address and the port number.

For example, the method further includes: sending a third request message to a user plane function network element, where the third request message includes the public address and the port number; and receiving a third response message from the user plane function network element, where the third response message includes the second private address.

For example, the method further includes: obtaining at least one private address corresponding to the public address and a port number corresponding to the at least one private address; and obtaining the second private address based on the at least one private address and the port number corresponding to the at least one private address that are obtained, and the port number in the second request message.

For example, the method further includes: sending a fourth request message to a user plane function network element, where the fourth request message includes the public address; and receiving a fourth response message from the user plane function network element, where the fourth response message includes the at least one private address corresponding to the public address and the port number corresponding to the at least one private address. Optionally, before the fourth request message is sent to the user plane function network element, it is found that the at least one private address corresponding to the public address and the port number corresponding to the at least one private address are not locally stored.

For example, the method further includes: sending a subscription request message to a user plane function network element, where the subscription request message includes the public address; and receiving one or more subscription response messages from the user plane function network element, where the one or more subscription response messages include the at least one private address corresponding to the public address and the port number corresponding to the at least one private address. Optionally, before the fourth request message is sent to the user plane function network element, it is found that the at least one private address corresponding to the public address and the port number corresponding to the at least one private address are not locally stored.

If the at least one private address does not include the first private address, determining that the first private address is invalid; or if the at least one private address includes the first private address, and a port number corresponding to the first private address is the same as the port number, determining that the first private address is valid.

For example, the method further includes: sending a fifth request message to a user plane function network element, where the fifth request message includes the first private address, the public address, and the port number, and the fifth request message is used to request the user plane function network element to determine whether the first private address is valid; and receiving a fifth response message from the user plane function network element, where the fifth response message indicates whether the first private address is valid.

Based on the foregoing solution, the network exposure function network element may check, in different manners, the first private address provided by the terminal device. For example, the network exposure function network element may query, based on the received public address and port number, the user plane function network element to obtain the second private address corresponding to the public address and the port number, and then check the first private address based on the second private address obtained by querying from the user plane function network element. For another example, the network exposure function network element may obtain the at least one private address corresponding to the public address and the port number corresponding to the at least one private address from the user plane function network element based on the received public address, and then check the first private address based on the at least one private address and the port number corresponding to the at least one private address that are obtained by querying from the user plane function network element. For another example, the network exposure function network element may provide the received first private address, the received public address, and the received port number to the user plane function network element, and the user plane function network element checks the first private address and provides a check result to the network exposure function network element. Different verification manners are provided to improve the flexibility of the solution.

With reference to the second aspect, in some implementations of the second aspect, the method further includes: sending a discovery request message to a network function repository function network element, where the discovery request message includes the public address, and the discovery request message is used to obtain an address of a user plane function network element implementing an address translation function; and receiving a discovery response message from the network function repository function network element, where the discovery response message includes the address of the user plane function network element.

With reference to the second aspect, in some implementations of the second aspect, when the first indication information is sent to the edge enabler server, the method further includes: sending a cause value to the edge enabler server, where the cause value indicates a cause for failing to obtain the identifier of the terminal device.

According to a third aspect, this application provides a communication method. The method may be performed by a user plane function network element, or may be performed by a component (for example, a chip or a circuit) of the user plane function network element. This is not limited in this application.

The communication method includes: receiving a third request message from a network exposure function network element, where the third request message is used to obtain a second private internet protocol address of a terminal device, and the third request message includes a public address and a port number of the terminal device; determining a second private address of the terminal device based on the public address and the port number; and sending a third response message to the network exposure function network element, where the third response message includes the second private address.

According to a fourth aspect, this application provides a communication method. The method may be performed by a user plane function network element, or may be performed by a component (for example, a chip or a circuit) of the user plane function network element. This is not limited in this application.

The communication method includes: receiving a fourth request message from a network exposure function network element, where the fourth request message includes a first public internet protocol address of a terminal device; determining, based on the public address, at least one private address corresponding to the public address and a port number corresponding to the at least one private address; and sending a fourth response message to the network exposure function network element, where the fourth response message includes the at least one private address and the port number corresponding to the at least one private address.

Alternatively, the communication method includes: receiving a subscription request message from a network exposure function network element, where the subscription request message includes a first public internet protocol address of a terminal device; and sending one or more subscription response messages to the network exposure function network element, where the one or more subscription response messages include at least one private address corresponding to the public address and a port number corresponding to the at least one private address.

According to a fifth aspect, this application provides a communication method. The method may be performed by a user plane function network element, or may be performed by a component (for example, a chip or a circuit) of the user plane function network element. This is not limited in this application.

The communication method includes: receiving a fifth request message from a network exposure function network element, where the fifth request message includes a first private internet protocol address of a terminal device, and a public address and a port number of the terminal device, and the fifth request message is used to request a user plane function network element to determine whether the first private address is valid; determining whether the first private address is valid based on a correspondence between a private address and a public address and a port number that are locally stored; and sending a fifth response message to the network exposure function network element, where the fifth response message indicates whether the first private address is valid.

With reference to the fifth aspect, in some implementations of the fifth aspect, determining whether the first private address is valid based on the correspondence between the private address and the public address and the port number that are locally stored includes: determining, based on the correspondence and the first private address, a public address and a port number that correspond to the first private address, where if the public address and the port number that correspond to the first private address are the same as the public address and the port number, the fifth response message indicates that the first private address is valid; or if the public address and the port number that correspond to the first private address are not the same as the public address and the port number, the fifth response message indicates that the first private address is invalid.

With reference to the fifth aspect, in some implementations of the fifth aspect, determining whether the first private address is valid based on the correspondence between the private address and the public address and the port number that are locally stored includes: if determining, based on the correspondence and the first private address, that a public address and a port number that correspond to the first private address fails to be obtained, the fifth response message indicates that the first private address is invalid.

With reference to the fifth aspect, in some implementations of the fifth aspect, determining whether the first private address is valid based on the correspondence between the private address and the public address and the port number that are locally stored includes: determining, based on the correspondence, the public address, and the port number, a private address that corresponds to the public address and the port number, where if the private address that corresponds to the public address and the port number is the same as the first private address and the port number, the fifth response message indicates that the first private address is valid; or if the private address that corresponds to the public address and the port number is not the same as the first private address and the port number, the fifth response message indicates that the first private address is invalid.

According to a sixth aspect, a communication apparatus is provided, to implement the method shown in the first aspect. The apparatus includes a transceiver unit and a processing unit. The transceiver unit is configured to receive and send information, and the processing unit is configured to perform an internal processing action.

According to a seventh aspect, a communication apparatus is provided, to implement the method shown in the second aspect. The apparatus includes a transceiver unit and a processing unit. The transceiver unit is configured to receive and send information, and the processing unit is configured to perform an internal processing action.

According to an eighth aspect, a communication apparatus is provided, to implement the methods shown in the third aspect to the fifth aspect. The apparatus includes a transceiver unit and a processing unit. The transceiver unit is configured to receive and send information, and the processing unit is configured to perform an internal processing action.

According to a ninth aspect, this application provides a communication method. The method may be performed by an edge application server, or may be performed by a component (for example, a chip or a circuit) of the edge application server. This is not limited in this application.

The communication method includes: receiving second indication information from an edge enabler server, where the second indication information indicates whether an edge enabler client in a terminal device and/or the terminal device are/is authenticated; and when the edge enabler client and/or the terminal device are/is not authenticated, sending a sixth request message to the edge enabler server, where the sixth request message is used to obtain an identifier of the terminal device, and the sixth request message includes a public address and a port number of the terminal device.

Based on the foregoing solution, before obtaining the identifier of the terminal device from the edge enabler server, the edge application server may determine, based on the second indication information received from the edge enabler server, whether the edge enabler client and/or the terminal device are/is authenticated. If the edge enabler client and/or the terminal device are/is not authenticated, the edge application server may carry the public address and the port number of the terminal device in the request message for obtaining the identifier of the terminal device, so that the edge enabler server obtains the identifier of the terminal device based on the public address and the port number of the terminal device, avoiding a failure to obtain the identifier of the terminal device based on a private address of the terminal device when the edge enabler client and/or the terminal device are/is not authenticated or avoiding obtaining an incorrect identifier of the terminal device.

With reference to the ninth aspect, in some implementations of the ninth aspect, before receiving the second indication information from the edge enabler server, the method further includes: sending a seventh request message to the edge enabler server, where the seventh request message is used to obtain an identifier of a terminal device, and the seventh request message includes a public address of the terminal device; and receiving the second indication information from the edge enabler server includes: receiving a seventh response message from the edge enabler server, where the seventh response message indicates failing to obtain the identifier of the terminal device, and the seventh response message includes the second indication information.

With reference to the ninth aspect, in some implementations of the ninth aspect, the seventh request message includes third indication information, and the third indication information indicates that the edge application server has a capability of obtaining the identifier of the terminal device via the edge enabler client.

According to a tenth aspect, this application provides a communication method. The method may be performed by an edge enabler server, or may be performed by a component (for example, a chip or a circuit) of the edge enabler server. This is not limited in this application.

The communication method includes: sending second indication information to an edge application server, where the second indication information indicates whether an edge enabler client in a terminal device and/or the terminal device are/is authenticated; and when the edge enabler client and/or the terminal device are/is not authenticated, receiving a sixth request message from the edge application server, where the sixth request message is used to obtain an identifier of the terminal device, and the sixth request message includes a public address and a port number of the terminal device.

With reference to the tenth aspect, in some implementations of the tenth aspect, before sending the second indication information to the edge application server, the method further includes: receiving a seventh request message from the edge application server, where the seventh request message is used to obtain an identifier of a terminal device, and the seventh request message includes a public address of the terminal device; and sending the second indication information to the edge application server includes: sending a seventh response message to the edge application server, where the seventh response message indicates failing to obtain the identifier of the terminal device, and the seventh response message includes the second indication information.

With reference to the tenth aspect, in some implementations of the tenth aspect, the seventh request message includes third indication information, and the third indication information indicates that the edge application server has a capability of obtaining the identifier of the terminal device via the edge enabler client.

With reference to the tenth aspect, in some implementations of the tenth aspect, before determining whether the edge enabler client in the terminal device and/or the terminal device are/is authenticated, the method further includes: determining that the edge application server has the capability of obtaining the identifier of the terminal device via the edge enabler client.

According to an eleventh aspect, a communication apparatus is provided, to implement the method shown in the ninth aspect. The apparatus includes a transceiver unit and a processing unit. The transceiver unit is configured to receive and send information, and the processing unit is configured to perform an internal processing action.

According to a twelfth aspect, a communication apparatus is provided, to implement the method shown in the tenth aspect. The apparatus includes a transceiver unit and a processing unit. The transceiver unit is configured to receive and send information, and the processing unit is configured to perform an internal processing action.

According to a thirteenth aspect, this application provides a communication method. The method may be performed by an edge enabler server, or may be performed by a component (for example, a chip or a circuit) of the edge enabler server. This is not limited in this application.

The communication method includes: receiving a first request message from a terminal device, where the first request message is used to obtain an identifier of the terminal device, and the first request message includes a first private address of the terminal device; determining whether an edge enabler client of the terminal device and/or the terminal device are/is authenticated; and when the edge enabler client and/or the terminal device are/is not authenticated, obtaining a public address and a port number of the terminal device, and obtaining the identifier of the terminal device based on the public address and the port number.

Based on the foregoing solution, after receiving the first request message for obtaining the identifier of the terminal device from the terminal device, the edge enabler server may determine whether the edge enabler client of the terminal device and/or the terminal device are/is authenticated. When the edge enabler client of the terminal device and/or the terminal device are/is not authenticated, the edge enabler server may obtain the public address and the port number of the terminal device, and obtain the identifier of the terminal device based on the public address and the port number, to avoid still obtaining the identifier of the terminal device based on the first private address of the terminal device when the edge enabler client of the terminal device and/or the terminal device are/is not authenticated, thereby improving security.

With reference to the thirteenth aspect, in some implementations of the thirteenth aspect, the method further includes: sending a first response message to the terminal device, where the first response message includes the identifier of the terminal device.

According to a fourteenth aspect, a communication apparatus is provided, to implement the method shown in the thirteenth aspect. The apparatus includes a transceiver unit and a processing unit. The transceiver unit is configured to receive and send information, and the processing unit is configured to perform an internal processing action.

According to a fifteenth aspect, a communication system is provided, including an edge enabler server, a network exposure function network element, and a user plane function network element, where the edge enabler server is configured to perform the method shown in the first aspect, the network exposure function network element performs the method shown in the second aspect, and the user plane function network element performs the method shown in the third aspect.

According to a sixteenth aspect, a communication system is provided, including an edge application server and an edge enabler server, where the edge application server is configured to perform the method shown in the ninth aspect, and the edge enabler server is configured to perform the method shown in the tenth aspect.

According to a seventeenth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to an eighteenth aspect, this application provides a processor, configured to perform the methods provided in the foregoing aspects. In a process of performing the methods, a process of sending the information and a process of obtaining/receiving the information in the foregoing methods may be understood as a process of outputting the information by the processor and a process of receiving the inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the inputted information, the transceiver obtains/receives the information, and inputs the information into the processor. Furthermore, after the transceiver receives the information, other processing may need to be performed on the information before the information is inputted into the processor.

According to the foregoing principle, for example, receiving a request message as mentioned in the foregoing methods may be understood as receiving inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a nineteenth aspect, a computer-readable storage medium is provided. The computer-readable medium stores program code executed by a device, and the program code is used to perform the methods provided in the foregoing aspects.

According to a twentieth aspect, a computer program product including instructions is provided. When the computer program product runs on a computer, the computer is enabled to perform the methods provided in the foregoing aspects.

According to a twenty-first aspect, a chip is provided. The chip includes a processor and a communication interface, and the processor reads, through the communication interface, instructions stored in a memory, to perform the methods provided in the foregoing aspects.

Optionally, in an implementation, the chip may further include a memory. The memory stores instructions. The processor is configured to execute the instructions stored in the memory, and when the instructions are executed, the processor is configured to perform the methods provided in the foregoing aspects.

### BRIEF DESCRIPTION OF DRAWINGS

FIG. 1 is a diagram of an architecture of a communication system 100 to which an embodiment of this application is applied;
FIG. 2 is a diagram of an architecture of a communication system 200 to which an embodiment of this application is applied;
FIG. 3 is a schematic flowchart of invoking a UE identifier API by an EEC;
FIG. 4 is a schematic flowchart of obtaining a UE identifier by an EES;
FIG. 5 is a schematic flowchart of providing IP address verification by an EEC according to this application;
FIG. 6A and FIG. 6B are a schematic flowchart of a communication method according to this application;
FIG. 7(a) is a diagram of performing NAT by a UPF according to this application;
FIG. 7(b) is a schematic flowchart of another communication method according to this application;
FIG. 8A and FIG. 8B are a schematic flowchart of still another communication method according to this application;
FIG. 9 is a block diagram of a communication apparatus 10 according to an embodiment of this application;
FIG. 10 is a diagram of another communication apparatus 20 according to an embodiment of this application; and
FIG. 11 is a diagram of a chip system 30 according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) mobile communication system, a new radio access technology (new radio access technology, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system. The mobile communication system may include non-standalone (non-standalone, NSA) networking and/or standalone (standalone, SA) networking. Alternatively, the technical solutions provided in this application may be applied to a future communication system, for example, a 6th generation mobile communication system. This is not limited in this application.

The technical solutions provided in this application may be further applied to machine type communication (machine type communication, MTC), long term evolution-machine (Long Term Evolution-machine, LTE-M), a device-to-device (device-to-device, D2D) network, a machine to machine (machine to machine, M2M) network, an Internet of Things (Internet of Things, IoT) network, or another network. The IoT network may include, for example, an Internet of Vehicles. Communication manners in an Internet of Vehicles system are collectively referred to as vehicle to X (vehicle to X, V2X, where X can stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

The technical solutions in this application may be applied to various communication scenarios, for example, a service continuity scenario, a mobile edge computing (mobile edge computing, MEC) scenario, or the like. This is not limited in this application. MEC can use a radio access network to provide a service and a cloud computing function that are required by a telecom user nearby, thereby creating a carrier-class service environment with high performance, low latency, and high bandwidth, accelerating fast download of content, services, and applications on the network, and enabling a consumer to enjoy uninterrupted high-quality network experience.

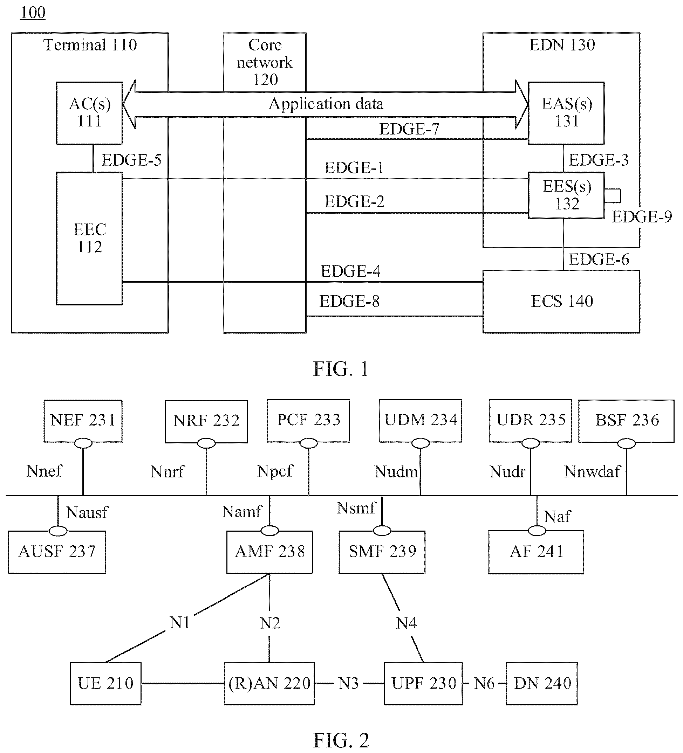

FIG. 1 is a diagram of an architecture of a communication system 100 to which an embodiment of this application is applied. As shown in FIG. 1, the communication system includes a terminal 110, a core network 120, an edge data network (edge data network, EDN) 130, and an edge configuration server (edge configuration server, ECS) 140. One or more application clients (Application client, AC) 111 and one or more edge enabler clients (Edge Enabler Client, EEC) 112 may be deployed in the terminal 110, and one or more edge application servers (Edge Application Server, EAS) 131 and one or more edge enabler servers (Edge Enabler Server, EES) 132 may be deployed in the EDN 130.

An EDGE-1 interface is an interface between the EES 132 and the EEC 112, an EDGE-2 interface is an interface between the EES 132 and the core network 120, an EDGE-3 interface is an interface between the EAS 131 and the EES 132, an EDGE-4 interface is an interface between the EEC 112 and the ECS 140, an EDGE-5 interface is an interface between the AC 111 and the EEC 112, an EDGE-6 interface is an interface between the EES 132 and the ECS 140, an EDGE-7 interface is an interface between the EAS 131 and the core network 120, an EDGE-8 interface is an interface between the ECS 140 and the core network 120, and an EDGE-9 interface is an interface between the EESs 132. FIG. 1 is merely a diagram. The communication system may further include another device, which is not shown in FIG. 1.

An application user signs a service agreement with an application provider, so that services are provided for the application user. The application user may log in to the AC 111 on the terminal 110, and communicate with the EAS 131 through the AC 111. The EEC 112 is a middleware layer, and is generally located in an operating system, or is located between the AC 111 and the operating system. The AC 111 may obtain an edge enabling service from the EEC 112 through an application programming interface (Application programming interface, API).

The architecture shown in FIG. 1 may be used by a terminal device in a 3rd generation partnership project (3rd Generation Partnership Project, 3GPP) network to discover an edge application deployed at a near end. Functional entities in the architecture are briefly described as follows:
1. EDN: is a local data network. The network includes an EES and an EAS.
   In one understanding, the EDN corresponds to only one data network, is a special local data network, includes an edge enabling function, may use a data network access identifier (data network access identifier, DNAI) and a data network name (data network name, DNN) identifier, and is a network logical concept.
   In another understanding, the EDN is an equivalent concept of a central cloud, may be understood as a local data center (in a geographical location concept), may be identified by using a DNAI, and may include one or more local data networks.
2. EAS: An application deployed in the EDN may be referred to as an EAS. Specifically, the EAS may be an instance (instance) that is of a server application program (for example, social media software, augmented reality (augmented reality, AR), or virtual reality (virtual reality, VR)) and that is deployed and run in the EDN.
   One or more EASs may be deployed in one or more EDNs for an application. EASs that are deployed and run in different EDNs may be considered as different EASs of one application, may share one domain name, and may use one IP address or different IP addresses.
   The EAS may also be referred to as an edge application, an edge application server, an application instance, an edge application instance, an MEC application, an MEC application server, an EAS function, or the like. This is not limited in this application. For ease of description, the EAS is collectively referred to as an edge application server in the following.
3. AC: is a peer entity of an application server on a terminal side, and is used by an application user (user) to obtain an application service from the application server. The AC may be a client program of an application on the terminal side, and may be connected to an application server on a cloud to obtain an application service, or may be connected to an EAS that is deployed and run in one or more EDNs to obtain an application service. The AC may also be referred to as an application program client. This is not limited in this application.
4. EES: provides required functions for an ECS and the EAS, for example, provides configuration information to an EEC, enables UE to exchange application data with the EAS, and supports transmission of application contexts. The EES may directly or indirectly interact with a 3GPP network. The EAS may initiate a registration procedure to the EES to register information about the EAS with the EES. Alternatively, information about the EAS may be registered with the EES through a management system, and the EES manages the EAS registered with the EES.
   The EES may further provide some enabling capabilities for the EAS deployed in the EDN. The EES may support registration of an edge application server and authentication and authorization of a terminal, provide IP address information of the edge application server for the terminal, and the like. The EES may further support obtaining an identifier and the IP address information of the edge application server, and further support sending the obtained identifier and the obtained IP address information to the ECS. The EES is deployed in the EDN.
   Generally, the EAS is registered with one EES, or information about one EAS is configured on one EES through a management system. The EES is referred to as an EES associated with the EAS, or the EAS is referred to as an EAS associated with the EES. The EES controls or manages the EAS registered or configured on the EES.
   The EAS associated with the EES may alternatively be replaced with an EAS corresponding to the EES, and the EES associated with the EAS may alternatively be replaced with an EES corresponding to the EAS. This is not limited in this application.
5. EEC: is used to discover available EASs on an EDN network. The EEC is a peer entity of the EES on the terminal side. The EEC may be configured to register information about the EEC and information about an AC with the EES, perform security authentication and authorization, obtain an IP address of the EAS from the EES, provide an edge computing enabling capability to the AC, and the like. For example, the EEC may return the IP address of the EAS to the AC through an EAS discovery service.
6. ECS: is configured to provide information about the EES to the EEC, and may be deployed by an operator or a third party. Application users communicate with each other through a connection between an application client and the EAS. The edge enabler client is a middleware layer, and is generally located in an operating system, or is located between the application client and the operating system. The AC may obtain an edge enabling service from the EEC through an API. The ECS is mainly responsible for EDN configuration. For example, the ECS may provide the information about the EES to a terminal. For another example, the ECS may alternatively interact with a DNS of an application to obtain information about the EAS, and directly provide the information about the EAS to a terminal. The ECS may alternatively obtain and store the information about the EAS and information about an IP address from another functional entity.
7. Terminal: may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an Internet of Things (Internet of Things, IoT), virtual reality, augmented reality, industrial control, self-driving, remote medical, a smart grid, smart furniture, a smart office, a smart wearable, smart transportation, a smart city, or the like. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

The core network 120 shown in FIG. 1 may be a system architecture of a 5G core network (5G core, 5GC). The following briefly describes the system architecture of the 5GC with reference to FIG. 2.

FIG. 2 is a diagram of a network architecture 200 according to this application. A 5G network architecture based on a service-based architecture in a non-roaming scenario defined in a 3GPP standardization process is used as an example. As shown in the figure, the network architecture may include three parts: a terminal device part, a DN, and an operator network public land mobile network (public land mobile network, PLMN) part. The following briefly describes functions of network elements of each part.

The terminal device part may include a terminal device 210. For the terminal device 210, refer to the foregoing description of the terminal 110 in FIG. 1. Details are not described herein again.

The operator network PLMN part may include but is not limited to a (radio) access network ((radio) access network, (R)AN) 220 and a core network (core network, CN) part.

The (R)AN 220 may be considered as a subnet of an operator network, and is an implementation system between a service node (for example, a network element providing a service) in the operator network and the terminal device 210. To access the operator network, the terminal device 210 first passes through the (R)AN 220, and then may be connected to the service node in the operator network through the (R)AN 220. An access network device (RAN device) in embodiments of this application is a device that provides a wireless communication function for the terminal device 210, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a pico base station device (pico), a mobile switching center, a network device in a future network, or the like. In systems using different radio access technologies, devices with functions of the access network device may have different names. For ease of description, in all embodiments of this application, apparatuses that provide the wireless communication function for the terminal device 210 are collectively referred to as an access network device, or referred to as a RAN or an AN for short. It should be understood that a specific type of the access network device is not limited in this specification.

The CN part may include but is not limited to the following NFs: a user plane function (user plane function, UPF) 230, a network exposure function (network exposure function, NEF) 231, a network function repository function (network function repository function, NRF) 232, a policy control function (policy control function, PCF) 233, a unified data management (unified data management, UDM) function 234, a unified data repository (unified data repository, UDR) function 235, a binding support function (Binding Support Function, BSF) 236, an authentication server function (authentication server function, AUSF) 237, an access and mobility management function (access and mobility management function, AMF) 238, and a session management function (session management function, SMF) 239.

A data network DN 240 may also be referred to as a packet data network (packet data network, PDN), and is usually a network located outside the operator network, for example, a third-party network. Certainly, in some implementations, the DN may alternatively be deployed by an operator. Whether the DN is deployed by an operator is not limited in this application. The operator network PLMN may access a plurality of data networks DNs 240. A plurality of services may be deployed on the data network 240, and may provide a data service, a voice service, and/or the like for the terminal device 210. For example, the data network DN 240 may be a private network of a smart factory, a sensor installed in a workshop of the smart factory may be the terminal device 210, a control server of the sensor is deployed in the data network DN 240, and the control server may provide a service for the sensor. The sensor may communicate with the control server to obtain an instruction of the control server, transmit collected sensor data to the control server based on the instruction, and the like. For another example, the data network DN 240 may be an internal office network of a company, a mobile phone or a computer of an employee of the company may be the terminal device 210, and the mobile phone or the computer of the employee may access information, data resources, and the like on the internal office network of the company. The terminal device 210 may establish a connection to the operator network through an interface (for example, N1) provided by the operator network, and use a data service, a voice service, and/or the like provided by the operator network. The terminal device 210 may further access the data network DN 240 through the operator network, and use an operator service deployed on the data network DN 240 and/or a service provided by a third party.

The following further briefly describes functions of the NFs included in the CN.
1. UPF: is a gateway provided by an operator, and is a gateway for communication between the operator network and the data network DN 240. The UPF includes user plane functions such as data packet routing and transmission, data packet detection, service usage reporting, quality of service (quality of service, QoS) processing, uplink data packet detection, and downlink data packet storage.
2. NEF: is a control plane function provided by the operator, and mainly enables a third party to use a service provided by a network, support the network in exposing a capability, an event, and data analysis, convert security configuration information from an external application to a PLMN and exchange information inside and outside the PLMN, provide an API interface exposed by the operator network to the outside, provide interaction between an external server and an internal operator network, and the like.
3. NRF: is a control plane function provided by the operator, and may be configured to maintain real-time information of a network function and a service in a network. For example, the NRF supports network service discovery, maintains services supported by NF configuration data (an NF profile) of NF instances, supports service discovery of a communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. PCF: is a control plane function provided by the operator, and supports a unified policy framework to govern network behavior and provide subscription information related to a policy rule and policy decision for another control function.
5. UDM: is a control plane function provided by the operator, and is responsible for storage of information like a subscription permanent identifier (subscription permanent identifier, SUPI) of a subscriber in the operator network, a generic public subscription identifier (generic public subscription identifier, GPSI) of the subscriber, a credential (credential), and the like. The SUPI is first encrypted during transmission, and the encrypted SUPI is referred to as a hidden subscription concealed identifier (subscription concealed identifier, SUCI). The information stored by the UDM may be used for authentication and authorization for the terminal device to access the operator network. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card or a stored small file like information related to encryption of the SIM card, and is used for authentication and/or authorization. It should be noted that the permanent identifier, the credential, a security context, authentication data (cookie), and a token are equivalent to information related to verification/authentication and authorization, and are not limited or distinguished between each other for ease of description in embodiments of this application.
6. UDR: is a control plane function provided by the operator, and provides a function of storing and obtaining subscription data for the UDM, provides a function of storing and obtaining policy data for the PCF, stores and obtains NF group ID (group ID) information of a user, and the like.
7. BSF: is mainly configured to store internal information corresponding to the selected PCF. Specifically, for a protocol data unit (Protocol Data Unit, PDU) session, the internal information stored by the BSF includes a subscriber identifier (for example, an SUPI), a DNN, a UE address (an IP address or a MAC address), and the like. For UE, the internal information stored by the BSF includes the subscriber identifier and an address of the selected PCF. In this application, the BSF is mainly responsible for session information binding. Therefore, in this application, the BSF may also be understood as a network element having a session information binding function. The network element having the session information binding function being referred to as the BSF is merely an example, and there may be another network element name subsequently. This is not limited in this application.
8. AUSF: is a control plane function provided by the operator, and is usually used for primary authentication, that is, authentication between the terminal device 110 (a subscriber) and the operator network. After receiving an authentication request initiated by the subscriber, the AUSF may perform authentication and/or authorization on the subscriber by using authentication information and/or authorization information stored in the UDM, or generate authentication and/or authorization information of the subscriber through the UDM. The AUSF may feed back the authentication information and/or the authorization information to the subscriber.
9. AMF: is a control plane network function provided by the operator network, and is responsible for access control and mobility management for the terminal device to access the operator network, for example, including functions such as mobility state management, allocation of user temporary identity, and user authentication and authorization.
   The AMF is configured to perform a NAS connection to UE, and has a same 5G NAS security context as the UE. The 5G NAS security context includes K_{AMF}, key identification information same as that of a NAS hierarchy key, a UE security capability, and uplink and downlink NAS COUNT values. The NAS hierarchy key includes a NAS encryption key and a NAS integrity protection key that are respectively used for confidentiality protection and integrity protection of NAS messages.
10. SMF: is a control plane network function provided by the operator network, and is responsible for managing a PDU session of the terminal device. The PDU session is a channel for transmitting a PDU, and the terminal device and the data network DN need to transmit PDUs to each other through the PDU session. The SMF is responsible for establishment, maintenance, deletion, and the like of the PDU session. The SMF includes session-related functions such as session management (for example, session establishment, modification, and release, including tunnel maintenance between the user plane function UPF 130 and the (R)AN 120), selection and control of the UPF, service and session continuity (service and session continuity, SSC) mode selection, and roaming.
11. AF: is a control plane network function provided by the operator network, is configured to provide application layer information, and may interact with a policy framework, directly interact with a policy framework to make a policy decision request, or the like through a network exposure function network element. The AF may be located inside or outside the operator network.

It may be understood that the foregoing network elements or functions may be physical entities in a hardware device, software instances running on dedicated hardware, or virtualization functions instantiated on a sharing platform (for example, a cloud platform). In short, an NF may be implemented by hardware or software.

In FIG. 2, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are also merely examples, and do not constitute any limitation on functions of the messages.

For ease of description, in embodiments of this application, network functions (such as the NEF, ..., the SMF, and the like) are collectively/briefly referred to as an NF. That is, the NF described below in embodiments of this application may be replaced with any network function. In addition, FIG. 2 schematically describes merely some network functions, and the NF described below is not limited to the network functions shown in FIG. 2.

It should be understood that the foregoing network architecture applied to embodiments of this application is merely a network architecture described from a perspective of a service-based architecture, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in the core network, for example, may be combined as required to form a network slice. The network elements of the core network may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in a 5G network and another future network. For example, in a 6G network, some or all of the foregoing network elements may still use terms in 5G, or may use other names.

For ease of understanding of embodiments of this application, some basic concepts in this application are briefly described.
1. Local data network (local DN): may be an access point (access point) of a data network that is very close to an attachment point (attachment point) of a user.
2. Application context (application context): may be running status information related to one or a group of users, for example, a game process or historical data of ML. Optionally, the application context may further include a context to which the one or more users subscribe in the EAS from a core network, for example, a subscribed transaction identifier. Optionally, the application context may further include a context of the one or more users on the EES, for example, a transaction identifier to which the EAS subscribes for the one or more users.
3. UE identifier API: To obtain an identifier (or referred to as a UE ID) that uniquely identifies UE, the EES exposes the UE identifier API to the EAS and the EEC. The UE identifier API is used by the EAS or the EEC to obtain the UE identifier from the EES. That the EEC invokes the UE identifier API may be applied to the following scenario:

When the EAS directly invokes the UE identifier API from the EES and the EAS fails to obtain the UE ID due to use of network address translation (Network Address Translation, NAT), the EAS may choose to send signaling to the AC, to cause the AC to initiate UE ID query to the EEC. Further, the EEC invokes the UE identifier API of the EES by using an IP address (for example, IPv4 and/or IPv6) allocated by the core network to obtain the UE identifier, and sends the obtained UE identifier to the EAS via the AC.

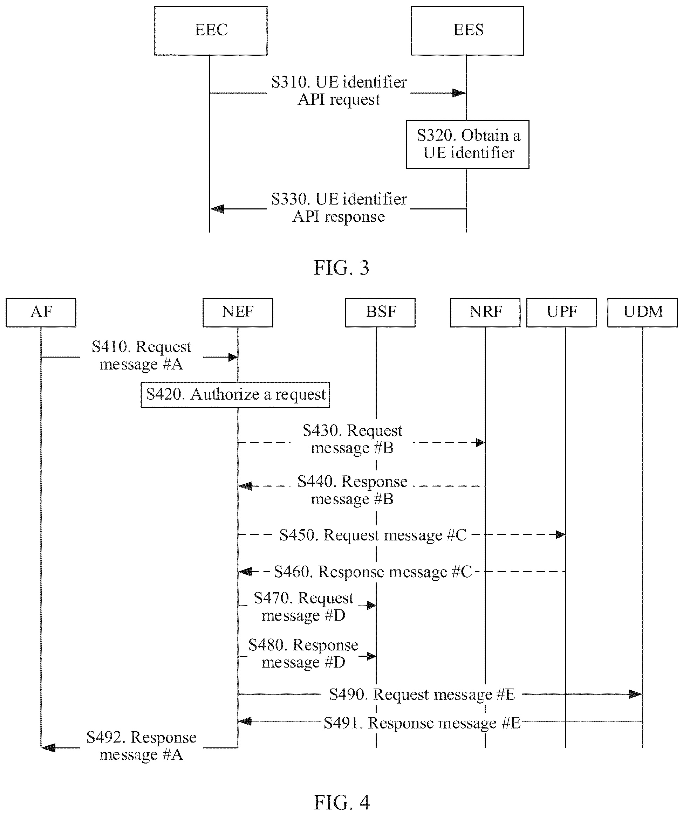

For ease of understanding, the following briefly describes a procedure in which the EEC invokes the UE identifier API with reference to FIG. 3. FIG. 3 is a schematic flowchart of invoking a UE identifier API by an EEC, and the following steps are included.

S310. The EEC sends a UE identifier API request to an EES.

The UE identifier API request includes a private IP address of UE, and the private IP address of the UE is an IP address (which may be an IPv4 address or an IPv6 address) provided by a core network to the UE.

S320. The EES obtains a UE identifier.

Specifically, the EES obtains the UE identifier from the core network based on the private IP address of the UE in the UE identifier API request. The following describes in detail how the EES obtains the UE identifier (Identifier, ID) with reference to FIG. 4. Details are not described herein.

S330. The EES sends a UE identifier API response to the EEC.

The UE identifier API response includes the UE identifier. The UE identifier is the UE identifier obtained in step S320.

FIG. 4 is a schematic flowchart of obtaining a UE identifier by an EES, and the following steps are included.

S410. An AF sends a request message #A to an NEF.

The request message #A is used to request the UE ID. For example, the AF requests the UE ID via an Nnef_UEId_Get service operation.

The request message #A should include a UE address (for example, an IP address or a MAC address) and an AF identifier, and may further include a port number associated with the IP address, an application port ID, an IP domain, and the like.

Optionally, the AF may further provide a corresponding data network name (Data Network Name, DNN) and/or single network slice selection assistance information (Single network slice selection assistance information, S-NSSAI).

S420. The NEF authorizes an AF request.

If the NEF does not authorize the AF request, the NEF replies to the AF with a result value, indicating an authorization failure; or if the NEF authorizes the AF request, the NEF proceeds with the following steps.

Optionally, the NEF determines the corresponding DNN and/or S-NSSAI information. The DNN and/or S-NSSAI may be provided by the AF, or may be determined by the NEF based on the AF identifier in the request message #A.

If the NEF receives the port number in step S410, the NEF may identify, based on a configuration, whether the received address and an actual UE private IP address allocated by a 5GC are different IP addresses. If the IP addresses are different, the NEF performs steps S430 to S460. If the IP addresses are the same, steps S430 to S460 are skipped.

S430. The NEF sends a request message #B to an NRF.

The request message #B is used to obtain an address of a UPF that implements a NAT function for a UE (public) IP address. For example, the NEF uses an Nnrf_NFDiscovery service operation to obtain the address of the UPF that implements the NAT function.

The request message #B includes the UE (public) IP address, and may further include the DNN and the S-NSSAI that are associated with the AF ID, the IP domain, and the like.

S440. The NRF sends a response message #B to the NEF.

The response message #B responds to the request message #B, and the response message #B includes the address of the UPF that implements the NAT function for the UE (public) IP address. For example, the NRF sends an Nnrf_NFDiscovery response message to the NEF.

S450. The NEF sends a request message #C to the UPF.

The request message #C is used to obtain the UE (private) IP address. For example, the NEF sends an Nupf_GetPrivateUEIP_Get service operation to the UPF.

The request message #C includes the UE (public) IP address and the port number, and optionally includes the IP domain, the DNN, and the S-NSSAI that are associated with the AF ID.

S460. The UPF sends a response message #C to the NEF.

The response message #C responds to the foregoing request message #C, and the response message #C includes a UE IP address, and optionally includes the IP domain. For example, the UPF sends an Nupf_GetPrivateUEIP_Get response message to the NEF.

If the UPF uses the NAT function, the UE IP address returned by the UPF is the UE private IP address.

S470. The NEF sends a request message #D to a BSF.

The request message #D includes the UE address and the IP domain and/or the DNN and/or the S-NSSAI for retrieving session binding information of the UE. For example, the NEF sends an Nbsf_Management _Discovery service operation to the BSF.

S480. The BSF sends a response message #D to the NEF.

The response message #D responds to the request message #D, and if the response message #D does not carry a SUPI, the NEF replies to the AF with a result value, indicating that the UE ID is unavailable.

S490. The NEF sends a request message #E to a UDM.

The NEF interacts with the UDM, to retrieve an AF-specific UE identifier via, for example, an Nudm_SDM_Get service operation. The request message #E includes the SUPI, and at least one of the application port ID or the AF identifier.

S491. The UDM sends a response message #E to the NEF.

The UDM responds to the NEF with the AF-specific UE identifier. The identifier is represented as an external identifier for the UE, and the identifier is uniquely associated with the application port ID, MTC provider information, and/or the AF identifier.

S492. The NEF sends a response message #A to the AF.

The NEF responds to the AF with information (including the external identifier) received from the UDM.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information, the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "510" and "520" are merely identifiers for ease of description, and do not limit a sequence of performing steps.

Third, in this application, a word "example" or "for example" represents giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a related concept in a specific manner.

Fourth, "save" in embodiments of this application may mean that saved in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement same or similar functions in an existing or future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

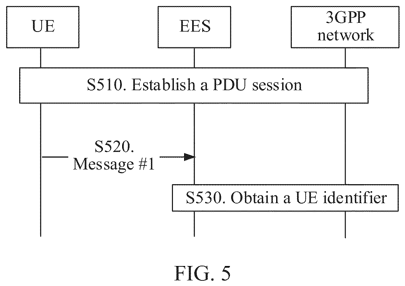

The foregoing briefly describes, with reference to FIG. 1, a scenario to which the communication method provided in embodiments of this application can be applied, describes basic concepts that may be used in embodiments of this application, and describes, in the basic concepts, the procedure in which the EEC invokes the UE identifier API with reference to FIG. 3 and FIG. 4. It is specified in current protocols that, for the procedure in which the EEC invokes the UE identifier API, if a private IP address provided by the EEC is not verified or the EEC is not authorized to use the provided private IP address, a malicious EEC may obtain an identifier of another UE by using an IP address spoofing attack. To prevent a malicious EEC from obtaining an identifier of another UE by using an IP address spoofing attack, one solution is that the EEC provides IP address verification. The following briefly describes the solution with reference to FIG. 5.

FIG. 5 is a schematic flowchart of providing IP address verification by an EEC according to this application, and the following steps are included.

S510. Establish a PDU session.

In this embodiment, during PDU session establishment, an SMF or a UPF generates a random ticket value in a UE IP address allocation process, sends the ticket value to a PCF, and then stores the ticket value in a BSF as a part of PDU session binding information. In addition to a private IP address, the ticket value is also sent to UE.

S520. The UE sends a message #1 to an EES.

The message #1 includes the ticket value and the private IP address.

S530. The EES invokes a UE identifier.

Specifically, the EES invokes an Nnef_UEId GET service operation by using the ticket value and the private IP address. The NEF sends the received ticket value to the BSF in an Nbsf_Management _Discovery service operation, and the BSF performs verification by checking a mapping relationship between the ticket value and the IP address. If the verification succeeds, the NEF provides an AF-specific GPSI to the EES.

However, in the solution shown in FIG. 5, an existing PDU session establishment procedure needs to be modified, affecting the UE, the SMF network element, and the BSF network element.

This application provides a communication method, which may be applied to the communication system shown in FIG. 1, to implement, without impact on a PDU session establishment procedure, security protection for invoking a UE identifier API by an EEC.

It should be understood that a specific structure of an execution body of the method provided in embodiments of this application is not specifically limited in the following embodiments, provided that communication can be performed according to the method provided in embodiments of this application by running a program that records code of the method provided in embodiments of this application. For example, the execution body of the method provided in embodiments of this application may be a network element, or a functional module that can invoke and execute a program in a network element.

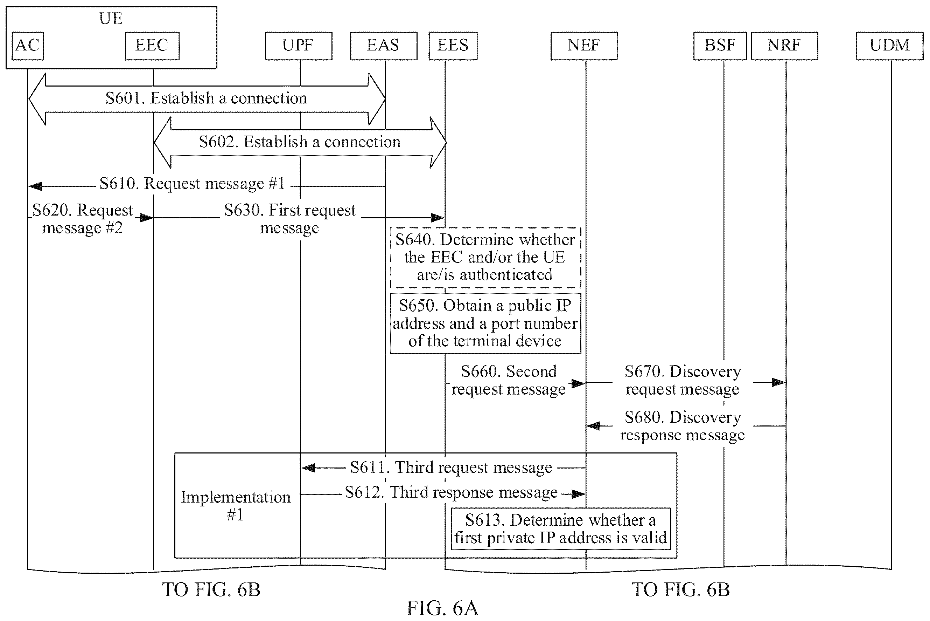

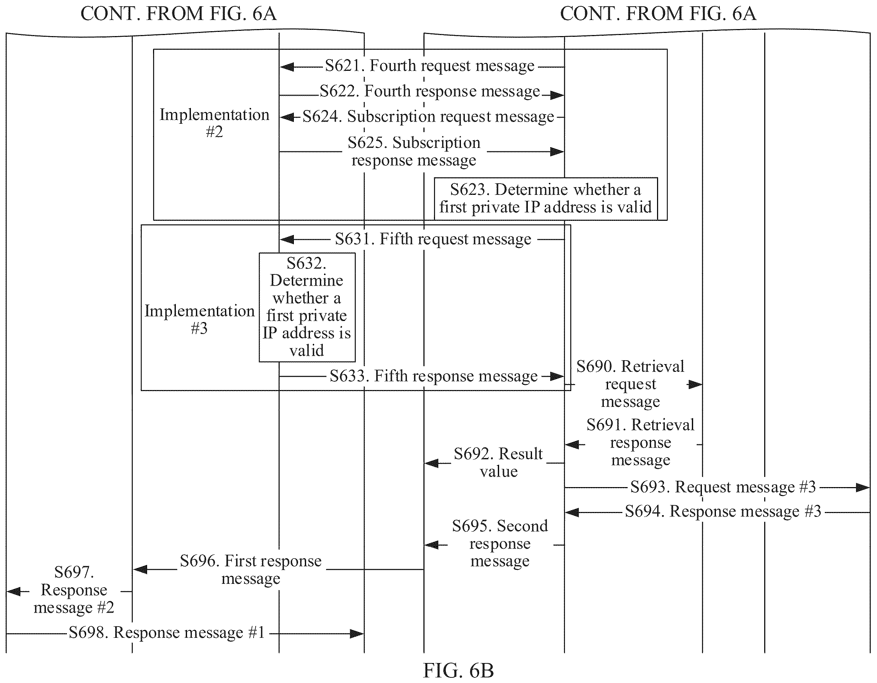

FIG. 6A and FIG. 6B are a schematic flowchart of a communication method according to this application, and the following steps are included.

S601. Establish a connection between an edge application server and an application client.

For example, in this embodiment, a possible manner of establishing the connection between the edge application server and the application client is as follows: When a terminal user needs to obtain a service, the terminal user may perform an operation (for example, click the application client) on the application client in a terminal device, to cause the application client to send a connection establishment request to an application server that provides the service, to establish a connection to the application server. If the application server that provides the service that is obtained by the terminal device is the edge application server, the connection is established between the application client and the edge application server.

The edge application server may be the EAS shown in FIG. 1. It should be understood that a name of the edge application server is not limited in this embodiment, and all devices that can implement functions of the edge application server in this embodiment may be considered as the edge application server in this embodiment. For ease of description, the following uses an example in which the edge application server is the EAS for description.

In addition, the application client may be the AC shown in FIG. 1. It should be understood that a name of the application client is not limited in this embodiment, and all devices that can implement functions of the application client in this embodiment may be considered as the application client in this embodiment. For ease of description, the following uses an example in which the application client is the AC for description.

S602. Establish a connection between an edge enabler client and an edge enabler server.

For example, in this embodiment, a possible manner of establishing the connection between the edge enabler client and the edge enabler server is as follows: When the application client in the terminal device in step 601 needs to discover the application server that provides the service, the application client sends a message to the edge enabler client, to cause the edge enabler client to interact with an edge configuration function to obtain information about the edge enabler server, and further, the connection is established between the edge enabler client and the edge enabler server. For example, the connection may be a transport layer security-based connection, where a secure connection may be established based on one-way authentication of a certificate of the edge enabler server, or may be established based on a generic bootstrapping architecture (Generic Bootstrapping Architecture, GBA), or may be established based on authentication and key management for applications (Authentication and Key Management for Applications, AKMA).

The edge enabler client may be the EEC shown in FIG. 1. It should be understood that a name of the edge enabler client is not limited in this embodiment, and all devices that can implement functions of the edge enabler client in this embodiment may be considered as the edge enabler client in this embodiment. For ease of description, the following uses an example in which the edge enabler client is the EEC for description.

The edge enabler server may be the EES shown in FIG. 1. It should be understood that a name of the edge enabler server is not limited in this embodiment, and all devices that can implement functions of the edge enabler server in this embodiment may be considered as the edge enabler server in this embodiment. For ease of description, the following uses an example in which the edge enabler server is the EES for description.

S610. The EAS sends a request message #1 to the AC, in other words, the AC receives the request message #1 from the EAS.

Specifically, in this embodiment, when the EAS determines to obtain a UE identifier via the EEC, the EAS sends the request message #1 to the AC, where the request message #1 is used to obtain the UE identifier. For example, when the EAS directly invokes a UE identifier API from the EES, and the EAS fails to obtain the UE ID due to use of NAT, the EAS may choose to send signaling to the AC, to cause the AC to initiate UE ID query to the EEC. Further, the EEC invokes the UE identifier API of the EES to obtain the UE identifier, and sends the obtained UE identifier to the EAS via the AC.

It should be noted that, in this embodiment, a cause for which the EAS initiates a UE identifier obtaining request to the AC is not limited. The foregoing failure of the EAS to obtain the UE ID by directly invoking the UE identifier API from the EES is merely an example, and does not constitute any limitation on the protection scope of this application. The EAS may further initiate the UE identifier obtaining request to the AC in another scenario. For example, the EAS is configured as obtaining the UE identifier via the AC. Examples are not described herein one by one.

S620. The AC sends a request message #2 to the EEC, in other words, the EEC receives the request message #2 from the AC.

Specifically, the AC sends, to the EEC based on the request message #1 from the EAS, the request message #2 for obtaining the UE ID, where the request message #2 includes an EAS identifier (identifier, ID). For a definition related to the request message #2, refer to descriptions of sending, to the EEC by the AC, a request message for obtaining a UE ID in a current protocol (for example, clause 8.14.2.6 in 3GPP TS 23.558). Details are not described in this embodiment.

Further, after receiving the request message #2 that is for obtaining the UE ID and that is sent by the AC, the EEC sends a first UE identifier API request message to the edge enabler server, and in this case, the method shown in FIG. 6A and FIG. 6B further includes the following step:
S630. The EEC sends a first request message to the EES, in other words, the EES receives the first request message from the EEC. The first request message is used to obtain the identifier of the terminal device.

Optionally, the first request message is the first UE identifier API request message. For ease of description, the following uses an example in which the first request message is the first UE identifier API request message for description. However, a specific form of the first request message is not limited in this embodiment of this application, and the first request message may alternatively be another message that is sent by the EEC to the edge enabler server and that can be used to obtain the identifier of the terminal device.

In addition, it should be noted that the EEC belongs to the terminal device. Therefore, that the EEC sends the first request message to the EES may also be understood as that the terminal device sends the first request message to the EES.

Specifically, the first UE identifier API request message includes a first private address of the terminal device and the EAS ID. The first private address of the terminal device may identify the terminal device in a 5GC network, and includes but is not limited to a first private IP address of the terminal device. For ease of description, the following uses an example in which the first private address of the terminal device is the first private IP address for description. However, a specific form of the first private address is not limited in this embodiment of this application, and the first private address may alternatively be another address (for example, a MAC address) that can identify the terminal device in the 5GC network.

It should be noted that the first UE identifier API request message is sent to the EES through a UPF. If the UPF performs NAT processing, the UPF replaces a first private IP address of a received IP data packet including the first UE identifier API request message with a public IP address of the UE, and sets a port number to a port number that identifies the terminal device under the public IP address.

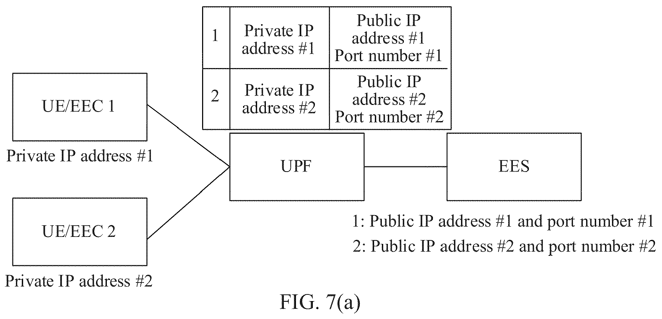

For ease of understanding, how the UPF performs NAT processing is briefly described with reference to FIG. 7(a). It can be learned from FIG. 7(a) that the UPF may receive IP data packets from different EECs, namely, UE (for example, UE/an EEC 1 and UE/an EEC 2 shown in FIG. 7(a)) and each including a UE identifier API request message. A private IP address of an IP data packet #1 sent by the UE/EEC 1 is a private IP address #1, and a private IP address of an IP data packet sent by the UE/EEC 2 is a private IP address #2. After the UPF receives the IP data packet #1 sent by the UE/EEC 1, if performing NAT processing, the UPF replaces the private IP address #1 of the IP data packet #1 with a public IP address #1 and a port number #1 of the UE 1, to obtain an IP data packet #1'. After the UPF receives the IP data packet #2 sent by the UE/EEC 2, if performing NAT processing, the UPF replaces the private IP address #2 of the IP data packet #2 with a public IP address #2 and a port number #2 of the UE 2, to obtain an IP data packet #2'. Then, the UPF sends, to the EES, the IP data packet #1' and the IP data packet #2' that are obtained through the NAT processing. The IP data packet #1' and the IP data packet #2' are received on the EES side. A source IP address of the IP data packet #1' is the public IP address #1, and a source port number is the port number #1. A source IP address of the IP data packet #2' is the public IP address #2, and a source port number is the port number #2.

Optionally, in this embodiment, after receiving the first UE identifier API request message, the EES may determine whether the EEC and/or the UE are/is authenticated, and in this case, the method procedure shown in FIG. 6A and FIG. 6B may further include the following steps:
S640. The EES determines whether the EEC and/or the UE are/is authenticated.

For example, the EES may determine, in the following several implementations, whether the EEC and/or the UE are/is authenticated:

In a possible implementation, in step 602, if the secure connection between the EEC and the EES is established by using a two-way authentication mechanism (for example, the generic bootstrapping architecture (Generic Bootstrapping Architecture, GBA) or authentication and key management for applications (Authentication and Key Management for Applications, AKMA)), the EES determines that the terminal device is authenticated.

In another possible implementation, in step 602, if authentication between the EEC and the EES is performed based on the certificate of the EES, it indicates that the UE is not authenticated.

In still another possible implementation, in step 602, if the EES performs authentication on the EEC based on a token, it indicates that the EEC is authenticated.

Optionally, information (for example, a manner of establishing the secure connection between the EEC and the EES, or an authentication manner) required for determining, by the EES, whether the EEC and/or the UE are/is authenticated may be locally stored in the EES, for example, locally stored in the EES as a context of the EEC and/or the UE.

It should be understood that the foregoing several implementations are merely examples for describing how the EES determines whether the EEC and/or the UE are/is authenticated, and do not constitute any limitation on the protection scope of this application. The EES may alternatively determine, in another possible manner, whether the EEC and/or the UE are/is authenticated. Examples are not described herein one by one.

It should be further understood that step S640 in this embodiment may not be performed, in other words, in this embodiment, the EES may not determine whether the EEC and/or the UE are/is authenticated. S650. The EES obtains a public address and a port number of the terminal device.

In a possible implementation, the EES may obtain the public address and the port number of the UE based on a source address bit and a source port number bit in a header of an IP data packet in which the first UE identifier API request message is encapsulated. A source address of the IP data packet is the public address of the UE, a source port number of the IP data packet is the port number of the UE, and the public address of the UE and the associated port number may be used by the UPF touniquely identify one terminal device, where the public address of the UE includes but is not limited to the public IP address of the terminal device. For ease of description, the following uses an example in which the public address of the terminal device is the public IP address for description. However, a specific form of the public address is not limited in this embodiment of this application, and the public address may alternatively be another address that can be used by the UPF to uniquely identify one terminal device together with the associated port number.

In another possible implementation, the EES requests, based on the EAS ID in the received first UE identifier API request message, the EAS to provide the public IP address and the port number of the UE.

For example, a procedure in which the EES obtains the public IP address and the port number of the UE from the EAS includes the following steps 1 to 3:
Step 1: The EES sends an IP address obtaining message to the EAS based on the EAS identifier in the UE identifier API request message.
Step 2: The EAS obtains the public IP address and the port number of the UE based on an IP data packet exchanged with the UE (for example, the AC); or the EAS obtains the public IP address and the port number of the UE locally, where the public IP address and the port number of the UE that are locally stored may be obtained and stored in an exchange process between the EAS and the UE before step 1.
Step 3: The EAS sends the public IP address and the port number of the UE to the EES. S660. The EES sends a second request message to a network exposure function network element, in other words, the network exposure function network element receives the second request message from the EES.

The network exposure function network element may be the NEF shown in FIG. 2. It should be understood that a name of the network exposure function network element is not limited in this embodiment, and all network elements that can implement functions of the network exposure function network element in this embodiment may be considered as the network exposure function network element in this embodiment. For ease of description, the following uses an example in which the network exposure function network element is the NEF for description.

Specifically, the second request message includes the first private IP address of the terminal device, and the public IP address and the port number of the terminal device.

Optionally, the second request message is an Nnrf_UEId_Get request.

Further, after receiving the second request message, the NEF queries a network function repository function network element for an address of the UPF that implements a NAT function, and in this case, the method procedure shown in FIG. 6A and FIG. 6B further includes the following steps:
S670. The NEF sends a discovery request message to the network function repository function network element, in other words, the network function repository function network element receives the discovery request message from the NEF.

The network function repository function network element may be the NRF shown in FIG. 2. It should be understood that a name of the network function repository function network element is not limited in this embodiment, and all network elements that can implement functions of the network function repository function network element in this embodiment may be considered as the network function repository function network element in this embodiment. For ease of description, the following uses an example in which the network function repository function network element is the NRF for description.

Specifically, the discovery request message includes the public IP address of the terminal device.

Optionally, the discovery request message is an Nnrf_NFDiscovery request. In this embodiment, the NEF determines, based on the port number included in the second request message, to send the Nnrf_NFDiscovery request to the NRF, where the request is used to obtain the address of the UPF that implements the NAT function.

S680. The NRF sends a discovery response message to the NEF, in other words, the NEF receives the discovery response message from the NRF.

The response message includes the address of the UPF that implements the NAT function for the UE (public) IP address. For example, the response message includes an address of a UPF #1. The UPF #1 can implement NAT for the UE (public) IP address.

Optionally, the discovery response message is an Nnrf_NFDiscovery response.

**In** this embodiment, after obtaining, from the NRF, the address of the UPF that implements the NAT function for the UE (public) IP address, the NEF may obtain, from the UPF, information used to determine whether the first private IP address provided by the EEC is valid, or may request the UPF to determine whether the first private IP address is valid. For example, whether the first private IP address is valid may be determined based on the public IP address and the port number of the UE. For example, a second private IP address corresponding to the public IP address and the port number is obtained, and if the first private IP address is the same as the second private IP address, the first private IP address is valid.

That the first private IP address is valid may be understood as that the first private IP address provided by the EEC is legal, accurate, or correct, is allocated to the terminal device to which the EEC belongs, or corresponds to the public address and the port number of the terminal device. That the first private IP address is invalid may be understood as that the first private IP address provided by the EEC is illegal, inaccurate, or incorrect, is not allocated to the terminal device of the EEC, or does not correspond to the public address and the port number of the terminal device.

**In** this embodiment, determining whether the first private IP address is valid includes but is not limited to the following several implementations:
Implementation #1: The NEF requests, from the UPF, the second private IP address of the terminal device used to verify the first private IP address provided by the EEC. In the case shown in the implementation #1, the method procedure shown in FIG. 6A and FIG. 6B further includes the following steps:
S611. The NEF sends a third request message to the UPF, in other words, the UPF receives the third request message from the NEF.

The third request message is used to obtain a second private address of the terminal device. Specifically, the third request message includes the public IP address and the port number of the terminal device.

S612. The UPF sends a third response message to the NEF, in other words, the NEF receives the third response message from the UPF.

The third response message includes the second private address of the terminal device.

S613. The NEF determines whether the first private IP address is valid.

In a possible implementation, if the second private IP address of the terminal device is the same as the first private IP address of the terminal device, the NEF determines that the first private IP address is valid, and performs subsequent steps S690 to S698. It should be understood that, in this implementation, the NEF determines, based on that the second private IP address of the terminal device is the same as the first private IP address of the terminal device, to perform the subsequent steps S690 to S698.

In another possible implementation, if the second private IP address of the terminal device is not the same as the first private IP address of the terminal device, the NEF determines that the first private IP address is invalid. The NEF may indicate, through a second response message, that the EES fails to obtain the UE identifier. For example, the second response message carries first indication information, and the first indication information indicates failing to obtain the UE identifier. Optionally, the second response message may further carry a failure cause value, for example, the IP address provided by the EEC is not authorized or is incorrect.

Implementation #2: The NEF requests, from the UPF, at least one private IP address and a port number corresponding to the at least one private IP address that are used to verify the first private IP address provided by the EEC. In the case shown in the implementation #2, the method procedure shown in FIG. 6A and FIG. 6B further includes the following steps:
S621. The NEF sends a fourth request message to the UPF, in other words, the UPF receives the fourth request message from the NEF.

The fourth request message is used to obtain at least one private IP address corresponding to the public IP address and a port number corresponding to the at least one private IP address. Specifically, the fourth request message includes the public IP address of the terminal device.

The at least one private IP address corresponding to the public IP address and the port number corresponding to the at least one private IP address may be understood as: The public IP address corresponds to a port number 1, a private IP address 1, a port number 2, a private IP address 2, and the like, where one public IP address may correspond to one or more private IP addresses, and each private IP address corresponds to one port number.

S622. The UPF sends a fourth response message to the NEF, in other words, the NEF receives the fourth response message from the UPF.

The fourth response message includes the at least one private IP address corresponding to the public IP address and the port number corresponding to the at least one private IP address.

S623. The NEF determines whether the first private IP address is valid.

In a possible implementation, the NEF obtains, based on the port number received from the EES, the second private IP address from the at least one private IP address corresponding to the public IP address and the port number corresponding to the at least one private IP address that are received from the UPF. For example, the at least one private IP address corresponding to the public IP address is: the private IP address 1 and the private IP address 2, where the private IP address 1 corresponds to the port number 1, and the private IP address 2 corresponds to the port number 2. If the port number received from the EES is the port number 2, the obtained second private IP address is the private IP address 2.

In this implementation, the NEF determines, based on whether the first private IP address is the same as the second private IP address, whether the first private IP address is valid.

If the second private IP address of the terminal device is the same as the first private IP address of the terminal device, subsequent steps S690 to S698 are performed.

In another possible implementation, if the NEF determines that the at least one private IP address does not include the first private IP address, the NEF determines that the first private IP address is invalid.

In this implementation, the NEF may indicate, through a second response message, that the EES fails to obtain the UE identifier. For example, the second response message carries first indication information, and the first indication information indicates failing to obtain the UE identifier. Optionally, the second response message may further carry a failure cause value, for example, the IP address provided by the EEC is not authorized or is incorrect.

**In** still another possible implementation, if the at least one private address includes the first private address, and a port number corresponding to the first private address is the same as the port number, determining that the first private address is valid, and the subsequent steps S690 to S698 are performed.

It should be noted that, when the NEF locally stores the at least one private IP address corresponding to the public IP address and the port number corresponding to the at least one private IP address, the NEF may not perform the foregoing steps S621 and S622, but perform the foregoing S623 (for example, before performing the foregoing step S621, the NEF finds that the at least one private IP address corresponding to the public IP address and the port number corresponding to the at least one private IP address are not locally stored). For example, before receiving the second request message, the NEF has obtained the at least one private IP address corresponding to the public IP address and the port number corresponding to the at least one private IP address.

Optionally, in the case shown in the implementation #2, the NEF may further subscribe to a relationship list from the UPF, and the method may further include the following steps:
S624. The NEF sends a subscription request message to the UPF, in other words, the UPF receives the subscription request message from the NEF.

Specifically, the NEF sends an Nupf_PrivateUEIP_Subscribe message to the UPF, to indicate the UPF to notify the NEF of a new list when information about a private IP address and a port number corresponding to the public IP address changes (including addition of a new private IP address and a new port number of the UE, or deletion of the private IP address and the port number).

S625. The UPF sends a subscription response message to the NEF, in other words, the NEF receives the subscription response message from the UPF.

When the UPF receives an Nupf_PrivateUEIP_Get message that includes only the public IP address of the UE, the UPF notifies the NEF of the new list by default when the information about the private IP address and the port number that correspond to the public IP address of the UE change. For example, the UPF may provide, by using one or more subscription response messages, the NEF with the at least one private IP address corresponding to the public IP address and the port number corresponding to the at least one private IP address.

Implementation #3: The NEF requests the UPF to verify the first private IP address provided by the EEC. In the case shown in the implementation #3, the method procedure shown in FIG. 6A and FIG. 6B further includes the following steps:
S631. The NEF sends a fifth request message to the UPF, in other words, the UPF receives the fifth request message from the NEF.

The fifth request message is used to request the UPF to verify the first private IP address provided by the EEC. The fifth request message includes the public IP address of the terminal device, and the first private IP address and the port number of the terminal device.

S632. The UPF determines whether the first private IP address is valid.

In a possible implementation, the UPF obtains a corresponding public IP address and port number of the UE based on the received first private IP address of the terminal device, and compares the corresponding public IP address and port number with the received public IP address and port number of the terminal device. If the corresponding public IP address and port number are the same as the received public IP address and port number of the terminal device, the UPF determines that the first private IP address is valid; or if the corresponding public IP address and port number are different from the received public IP address and port number of the terminal device, the UPF determines that the first private IP address is invalid.

In another possible implementation, if the UPF cannot obtain corresponding information based on the first private IP address of the terminal device, the UPF determines that the first private IP address is invalid.

In still another possible implementation, the UPF obtains the corresponding second private IP address based on the received public IP address and port number of the terminal device, verifies whether the second private IP address is the same as the first private IP address of the terminal device, and determines that the first private IP address is valid if the second private IP address is the same as the first private IP address of the terminal device, or determines that the first private IP address is invalid if the second private IP address is different from the first private IP address of the terminal device.

S633. The UPF sends a fifth response message to the NEF, in other words, the NEF receives the fifth response message from the UPF.

The fifth response message indicates whether the first private IP address is valid.

In a possible implementation, if the first private IP address is valid, subsequent steps S690 to S698 are performed.

In another possible implementation, if the first private IP address is invalid, the NEF may indicate, through a second response message, that the EES fails to obtain the UE identifier. For example, the second response message carries first indication information, and the first indication information indicates failing to obtain the UE identifier. Optionally, the second response message may further carry a failure cause value, for example, the IP address provided by the EEC is not authorized or is incorrect.

S690. The NEF sends a retrieval request message to a binding support function network element, in other words, the binding support function network element receives the retrieval request message from the NEF.

The binding support function network element may be the BSF shown in FIG. 2. It should be understood that a name of the binding support function network element is not limited in this embodiment, and all devices that can implement functions of the binding support function network element in this embodiment may be considered as the binding support function network element in this embodiment. For ease of description, the following uses an example in which the binding support function network element is the BSF for description.

Specifically, the retrieval request message includes the first private IP address of the terminal device. The retrieval request message is used to retrieve session binding information of the UE.

Optionally, the retrieval request message is an Nbsf_Management _Discovery service operation.

S691. The BSF sends a retrieval response message to the NEF, in other words, the NEF receives the retrieval response message from the BSF.

Specifically, the retrieval response message includes the session binding information.

**In** a possible implementation, if no SUPI is received in the session binding information sent by the BSF, the following step S692 is performed.

S692. The NEF replies to the EES with a result (Result) value, indicating that the UE ID is unavailable.

**In** another possible implementation, if a SUPI is received in the session binding information sent by the BSF, the following step S693 is performed.

S693. The NEF sends a request message #3 to a unified data management function network element, in other words, the unified data management function network element receives the request message #3 from the NEF.

The unified data management function network element may be the UDM shown in FIG. 2. It should be understood that a name of the unified data management function network element is not limited in this embodiment, and all devices that can implement functions of the unified data management function network element in this embodiment may be considered as the unified data management function network element in this embodiment. For ease of description, the following uses an example in which the unified data management function network element is the UDM for description.

Specifically, the request message #3 includes the SUPI, and at least one of an application port ID, an EES identifier, and the EAS identifier.

S694. The UDM sends a response message #3 to the NEF, in other words, the NEF receives the response message #3 from the UDM.

Specifically, the response message #3 includes the UE identifier, and the UE identifier may be a GPSI.

S695. The NEF sends a second response message to the EES, in other words, the EES receives the second response message from the NEF.

Specifically, the second response message includes the UE identifier, and the UE identifier may be a GPSI.

S696. The EES sends a first response message to the EEC, where the first response message includes the UE identifier. Optionally, the first response message is a first UE identifier API response message.

S697. The EEC sends a response message #2 to the AC, where the response message #2 includes the UE identifier.

S698. The AC sends a response message #1 to the EAS, where the response message #1 includes the UE identifier.

In the communication method shown in FIG. 6A and FIG. 6B, after receiving the request message for obtaining the terminal device from the EEC, the EES carries, in the request message that is for obtaining the identifier of the terminal device and that is sent to the NEF, the first private address received from the EEC, and the public address and the port number obtained by the EES. In this way, the NEF can determine, based on the received public address and port number, whether the first private address provided by the EEC is accurate, so as to determine whether to provide the identifier of the terminal device to the EEC, thereby avoiding still providing the identifier of the terminal device to the EEC when the first private address provided by the EEC is inaccurate, and improving security of obtaining the identifier of the terminal device by the EEC.

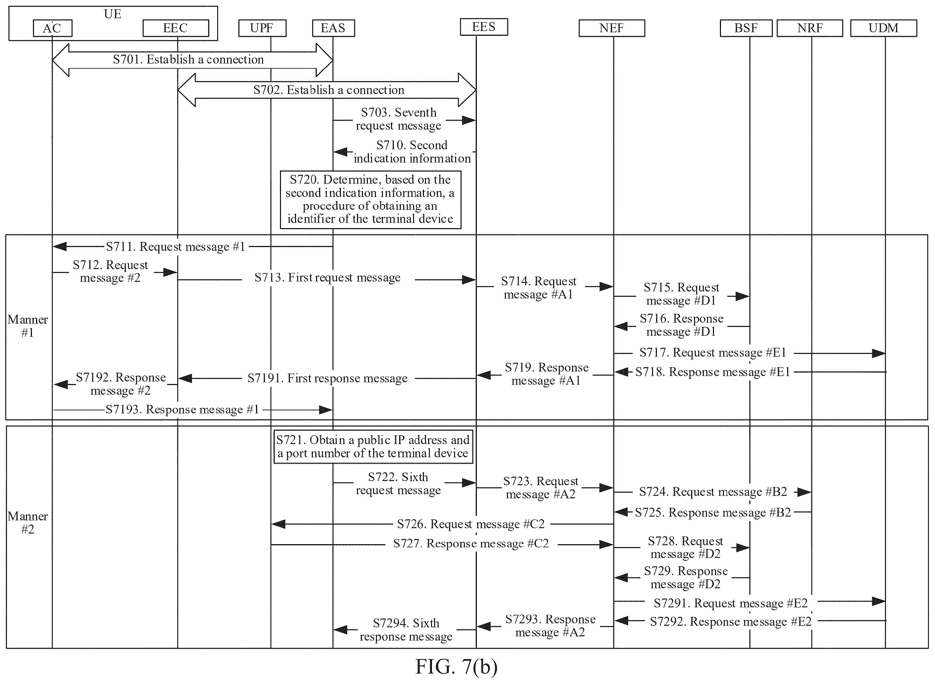

This application further provides a communication method in which an EAS may determine, based on whether UE/an EEC are/is authenticated, how to obtain a UE identifier via the EEC. For ease of understanding, the following describes the communication method in detail with reference to FIG. 7(b).

FIG. 7(b) is a schematic flowchart of a communication method according to this application, and the following steps are included.

S701. Establish a connection between an EAS and an AC.

Refer to the description of step S601 in FIG. 6A. Details are not described herein again.

S702. Establish a connection between an EEC and an EES.

Refer to the description of step S602 in FIG. 6A. Details are not described herein again.

S710. The EES sends second indication information to the EAS, in other words, the EAS receives the second indication information from the EES.

The second indication information indicates whether the EEC in a terminal device and/or the terminal device are/is authenticated.

**In** this embodiment, the EES determines whether the EEC and/or the terminal device are/is authenticated, and provides, to the EAS, the second indication information indicating whether the EEC and/or the terminal device are/is authenticated. For a manner in which the EES determines whether the EEC and/or the terminal device are/is authenticated, refer to the description of step S640 in the embodiment shown in FIG. 6A. Details are not described herein again.

S720. The EAS determines, based on the second indication information, a procedure of obtaining an identifier of the terminal device.

**In** a possible implementation, before the EES sends the second indication information to the EAS, the EES receives a seventh request message for obtaining the identifier of the terminal device from the EAS, and fails to obtain the identifier of the terminal device based on a public IP address of the terminal device that is carried in the seventh request message.

**In** this implementation, that the EES sends the second indication information to the EAS may be that: The EES sends a seventh response message to the EAS, where the seventh response message indicates failing to obtain the identifier of the terminal device, and the seventh response message includes the second indication information.

**In** this implementation, the method procedure shown in FIG. 7(b) may further include the following steps:

S703. The EAS sends the seventh request message to the EES, in other words, the EES receives the seventh request message from the EAS.

Further, in this embodiment, after learning whether the EEC and/or the terminal device are/is authenticated, the EAS may obtain the identifier of the terminal device in different manners.

Manner #1: The second indication information indicates that the EEC or the terminal device is authenticated, and a procedure in which the EAS determines, based on the second indication information, to obtain the identifier of the terminal device based on a private address of the terminal device is a procedure #1.

In the manner #1, the procedure #1 includes the following steps:
S711. The EAS sends a request message #1 to the AC, in other words, the AC receives the request message #1 from the EAS.
S712. The AC sends a request message #2 to the EEC, in other words, the EEC receives the request message #2 from the AC.
S713. The EEC sends a first request message to the EES, in other words, the EES receives the first request message from the EEC.

For related descriptions of step S711 to step S713, refer to the descriptions of step S610 to step S630 in the embodiment shown in FIG. 6A. Details are not described herein again.

In the manner #1, after receiving the first request message from the EEC, the EES obtains the identifier of the terminal device based on a first private address of the terminal device carried in the first request message, and in the case, the method procedure shown in FIG. 7(b) further includes the following steps: S714. The EES sends a request message #A1 to an NEF.

The request message #A1 is used to obtain the identifier of the terminal device, and the request message #A1 includes the first private address of the terminal device.

S715. The NEF sends a request message #D1 to a BSF.

The request message #D1 includes the first private address for the BSF to retrieve session binding information of UE.

S716. The BSF sends a response message #D1 to the NEF.

The response message #D1 responds to the request message #D1, and if the response message #D1 does not carry a SUPI, the NEF replies to the EES with a result value, indicating that obtaining the identifier of the terminal device fails.

S717. The NEF sends a request message #E1 to a UDM.

The NEF retrieves an AF-specific UE identifier via an Nudm_SDM_Get service operation. The request message #E1 includes the SUPI, and at least one of an application port ID or an AF identifier.

S718. The UDM sends a response message #E1 to the NEF.

The UDM responds to the NEF with the AF-specific UE identifier. The identifier is represented as an external identifier for the UE, and the identifier is uniquely associated with the application port ID, MTC provider information, and/or the AF identifier.

S719. The NEF sends a response message #A1 to the EES.

The response message #A1 is used to obtain the identifier of the terminal device, and the response message #A1 includes the identifier of the terminal device.

S7191. The EES sends a first response message to the EEC, where the first response message includes the identifier of the terminal device. Optionally, the first response message is a first UE identifier API response message.

S7192. The EEC sends a response message #2 to the AC, where the response message #2 includes the identifier of the terminal device.

S7193. The AC sends a response message #1 to the EAS, where the response message #1 includes the identifier of the terminal device.

Manner #2: The second indication information indicates that the EEC and/or the terminal device are/is not authenticated, and a procedure in which the EAS determines, based on the second indication information, to obtain the identifier of the terminal device based on a public address and a port number of the terminal device is a procedure #2.

In the manner #2, the procedure #2 includes the following steps:
S721. The EAS obtains the public IP address and the port number of the terminal device.

Specifically, the EAS obtains a public IP address and a port number of UE based on an IP data packet exchanged with the UE (for example, the AC).

S722. The EAS sends a sixth request message to the EES, in other words, the EES receives the sixth request message from the EAS.

The sixth request message is used to obtain the identifier of the terminal device, and the sixth request message includes the public address and the port number of the terminal device. Optionally, the sixth request message is a sixth UE identifier API request message.

S723. The EES sends a request message #A2 to an NEF.

The request message #A2 is used to obtain the identifier of the terminal device, and the request message #A2 includes the public address and the port number of the terminal device.

S724. The NEF sends a request message #B2 to an NRF.

The request message #B2 is used to obtain an address of a UPF that implements a NAT function for a UE (public) IP address. For example, the NEF uses an Nnrf_NFDiscovery service operation to obtain the address of the UPF that implements the NAT function. The request message #B2 includes a public address and the port number of the UE.

S725. The NRF sends a response message #B2 to the NEF.

The response message #B2 responds to the request message #B2, and the response message #B2 includes the address of the UPF that implements the NAT function for the public address of the UE.

S726. The NEF sends a request message #C2 to the UPF.

The request message #C2 is used to obtain a private address of the UE. The request message #C2 includes the public address and the port number of the UE.

S727. The UPF sends a response message #C2 to the NEF.

The response message #C2 responds to the request message #C2, and the response message #C2 includes the private address of the UE.

S728. The NEF sends a request message #D2 to a BSF.

The request message #D2 includes the private address of the UE for the BSF to retrieve session binding information of the UE.

S729. The BSF sends a response message #D2 to the NEF.

The response message #D2 responds to the request message #D2, and if the response message #D2 does not carry a SUPI, the NEF replies to an AF with a result value, indicating that the UE ID is unavailable.

S7291. The NEF sends a request message #E2 to a UDM.

The NEF retrieves an AF-specific UE identifier via an Nudm_SDM_Get service operation. The request message #E2 includes the SUPI, and at least one of an application port ID or an AF identifier.

S7292. The UDM sends a response message #E2 to the NEF.

The UDM responds to the NEF with the AF-specific UE identifier. The identifier is represented as an external identifier for the UE, and the identifier is uniquely associated with the application port ID, MTC provider information, and/or the AF identifier.

S7293. The NEF sends a response message #A2 to the EES.

The response message #A2 includes the identifier of the terminal device.

S7294. The EES sends a sixth response message to the EAS, where the sixth response message includes the identifier of the terminal device. Optionally, the sixth response message is a sixth UE identifier API response message.

In the communication method shown in FIG. 7(b), before initiating a UE ID obtaining procedure, the EAS obtains, from the EES, information about whether the UE and/or the EEC are/is authenticated, and obtains the identifier of the terminal device via the EEC when the UE is authenticated and/or the EEC is authenticated. Optionally, when the UE is authenticated and/or the EEC is authenticated, the identifier of the terminal device may alternatively be obtained based on the public address and the port number of the terminal device. When the UE and/or the EEC are/is not authenticated, the identifier of the terminal device is obtained based on the public address and the port number of the terminal device. Therefore, the EES obtains the identifier of the terminal device based on the public address and the port number of the terminal device, thereby avoiding a failure to obtain the identifier of the terminal device based on the private address of the terminal device when the UE and/or the EEC are/is not authenticated or avoiding an incorrect identifier of the terminal device.

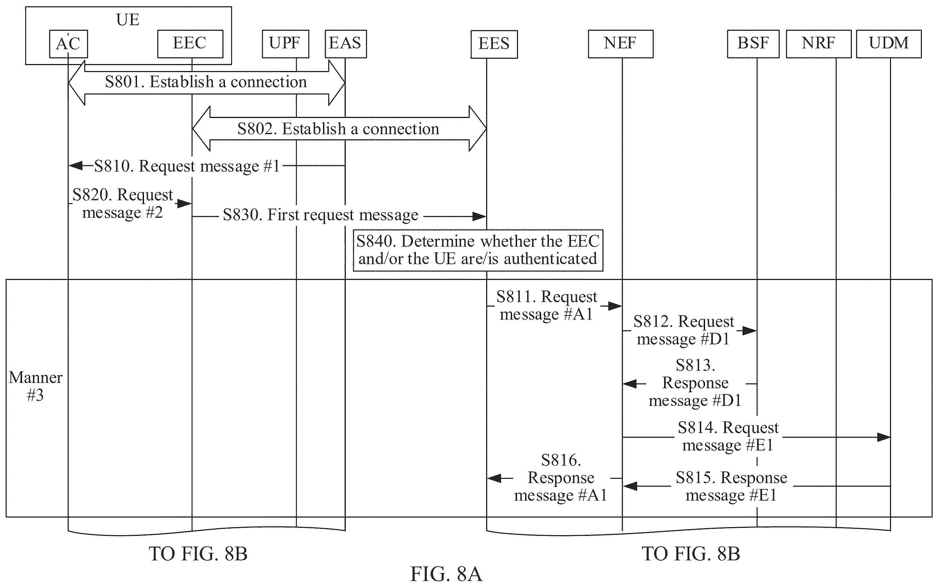

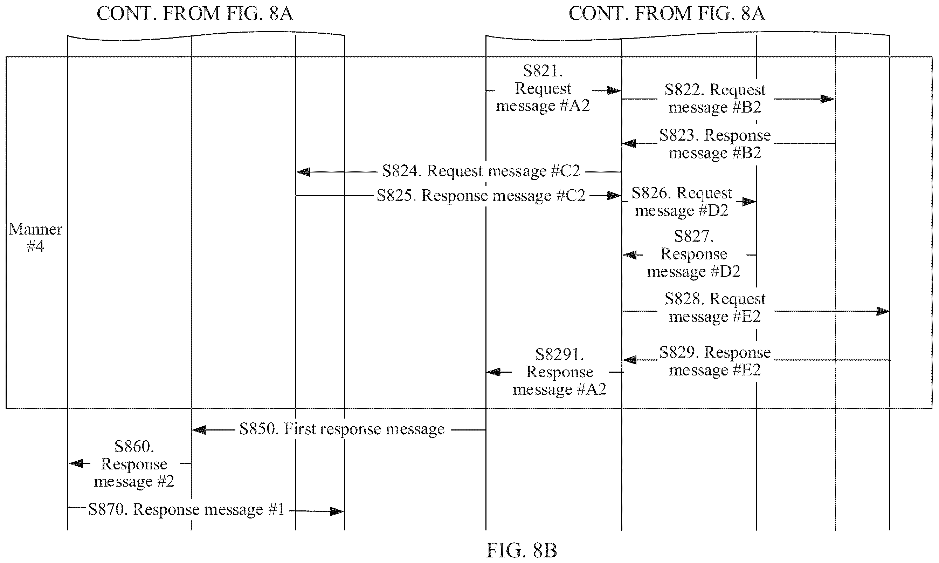

This application further provides still another communication method. After receiving a request message for obtaining a UE identifier from an EEC, an EES may determine, based on whether the EEC and/or whether UE is authenticated, a subsequent manner of obtaining the UE identifier. For ease of understanding, descriptions are provided with reference to FIG. 8A and FIG. 8B.

FIG. 8A and FIG. 8B are a schematic flowchart of still another communication method according to this application, and the following steps are included.

S801. Establish a connection between an EAS and an AC.

Refer to the description of step S601 in FIG. 6A. Details are not described herein again.

S802. Establish a connection between an EEC and an EES.

Refer to the description of step S602 in FIG. 6A. Details are not described herein again.

S810. The EAS sends a request message #1 to the AC, in other words, the AC receives the request message #1 from the EAS.

S820. The AC sends a request message #2 to an edge enabler client, in other words, the edge enabler client receives the request message #2 from the AC.

S830. The EEC sends a first request message to the EES, in other words, the EES receives the first request message from the EEC.

S840. The EES determines whether the EEC and/or UE are/is authenticated.

For related descriptions of S810 to S840 in this embodiment, refer to the related descriptions of steps S601 to S640 in FIG. 6A. Details are not described herein again.

A difference between this embodiment and the embodiment shown in FIG. 6A and FIG. 6B lies in that:
In this embodiment, the EES no longer performs the implementation #1 to the implementation #3 in the embodiment shown in FIG. 6A and FIG. 6B to determine whether the first private IP address provided by the EEC is valid, but determines, based on whether the EEC and/or the UE are/is authenticated, a manner to obtain the UE identifier. Specifically, in this embodiment, the EES obtains the UE identifier in the following two manners:
Manner #3: The EES interacts with a 5GC by using a private IP address provided by the EEC to obtain the UE ID. In the case shown in the manner #1, the method procedure shown in FIG. 8A and FIG. 8B further includes the following steps:
S811. The EES sends a request message #A1 to an NEF.

The request message #A1 is used to obtain an identifier of a terminal device, and the request message #A1 includes a first private address of the terminal device.

S812. The NEF sends a request message #D1 to a BSF.

The request message #D1 includes the first private address for the BSF to retrieve session binding information of the UE.

S813. The BSF sends a response message #D1 to the NEF.

The response message #D1 responds to the request message #D1, and if the response message #D1 does not carry a SUPI, the NEF replies to the EES with a result value, indicating a failure to obtain the identifier of the terminal device.

S814. The NEF sends a request message #E1 to a UDM.

S815. The UDM sends a response message #E1 to the NEF.

S816. The NEF sends a response message #A1 to the EES.

The response message #A1 is used to obtain the identifier of the terminal device, and the response message #A1 includes the identifier of the terminal device.

For related descriptions of step S811 to step S816, refer to the descriptions of step S714 to step S719 in the manner #1 of the embodiment shown in FIG. 7(b). Details are not described herein again.

Manner #4: The EES interacts with a 5GC by using a public IP address and a port number of the UE to obtain the UE ID. In the case shown in the manner #4, the method procedure shown in FIG. 8A and FIG. 8B further includes the following steps:

S821. The EES sends a request message #A2 to an NEF.

The request message #A2 is used to obtain an identifier of a terminal device, and the request message #A2 includes a public address and a port number of the terminal device.

S822. The NEF sends a request message #B2 to an NRF.

The request message #B2 is used to obtain an address of a UPF that implements a NAT function for a UE (public) IP address. For example, the NEF uses an Nnrf_NFDiscovery service operation to obtain the address of the UPF that implements the NAT function. The request message #B2 includes a public address and the port number of the UE.

S823. The NRF sends a response message #B2 to the NEF.

The response message #B2 responds to the request message #B2, and the response message #B2 includes the address of the UPF that implements the NAT function for the public address of the UE.

S824. The NEF sends a request message #C2 to the UPF.

The request message #C2 is used to obtain a private address of the UE. The request message #C2 includes the public address and the port number of the UE.

S825. The UPF sends a response message #C2 to the NEF.

The response message #C2 responds to the request message #C2, and the response message #C2 includes the private address of the UE.

S826. The NEF sends a request message #D2 to a BSF.

The request message #D2 includes the private address of the UE for the BSF to retrieve session binding information of the UE.

S827. The BSF sends a response message #D2 to the NEF.

The response message #D2 responds to the request message #D2, and if the response message #D2 does not carry a SUPI, the NEF replies to an AF with a result value, indicating that the UE ID is unavailable.

S828. The NEF sends a request message #E2 to a UDM.

S829. The UDM sends a response message #E2 to the NEF.

S8291. The NEF sends a response message #A2 to the EES.

The response message #A2 includes the identifier of the terminal device.

For related descriptions of step S821 to step S8291, refer to the descriptions of step S723 to step S7293 in the manner #3 of the embodiment shown in FIG. 7(b). Details are not described herein again.

After the EES obtains the identifier of the terminal device in the manner #3 and the manner #4, the method procedure shown in FIG. 8A and FIG. 8B further includes the following steps:

S850. The EES sends a first response message to the EEC, where the first response message includes the UE identifier.

S860. The EEC sends a response message #2 to the AC, where the response message #2 includes the UE identifier.

S870. The AC sends a response message #1 to the EAS, where the response message #1 includes the UE identifier.

In the communication method shown in FIG. 8A and FIG. 8B, the EES determines, based on whether the UE and/or the EEC are/is authenticated, an actual manner of obtaining the identifier of the terminal device, to avoid still obtaining the identifier of the terminal device based on the first private address of the terminal device when the UE and/or the EEC are/is not authenticated, thereby improving security.

It should be understood that sequence numbers of the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof to form a new embodiment.

It should be further understood that, in some of the foregoing embodiments, a device (for example, an AMF) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, an AMF) may alternatively be implemented by a component (for example, a chip or a circuit) of the device.

The foregoing describes, in detail with reference to FIG. 6A to FIG. 8B, the communication methods provided in embodiments of this application. The foregoing communication method is mainly described from a perspective of interaction between protocol layers of a terminal device. It may be understood that, to implement the foregoing functions, the terminal device includes corresponding hardware structures and/or software modules for performing the functions.

A person skilled in the art should be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

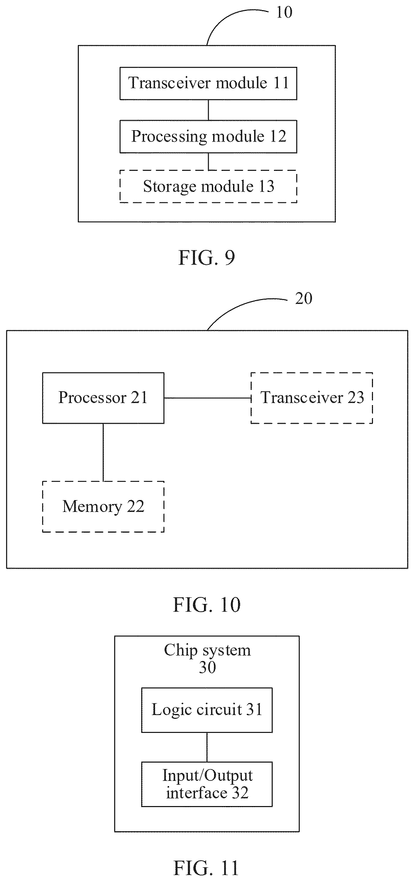

The following describes, in detail with reference to FIG. 9 to FIG. 11, communication apparatuses provided in this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit end device or a receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

FIG. 9 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the EES in the foregoing method embodiments, or may be a component (for example, a chip) of the EES.

The apparatus 10 may implement corresponding steps or procedures performed by the EES in the foregoing method embodiments. The transceiver module 11 may be configured to perform receiving and sending-related operations of the EES in the foregoing method embodiments, and the processing module 12 may be configured to perform processing-related operations of the EES in the foregoing method embodiments.

In a possible implementation, the transceiver module 11 is configured to receive a first request message from a terminal device, where the first request message is used to obtain an identifier of the terminal device, and the first request message includes a first private address of the terminal device. The transceiver module 11 is further configured to: obtain a public address and a port number of the terminal device, and send a second request message to a network exposure function network element, where the second request message is used to obtain the identifier of the terminal device, and the second request message includes the first private address, the public address, and the port number. The transceiver module 11 is further configured to receive first indication information or the identifier of the terminal device from the network exposure function network element, where the first indication information indicates failing to obtain the identifier of the terminal device.

In another possible implementation, the transceiver module 11 is configured to send second indication information to an edge application server, where the second indication information indicates whether an edge enabler client in a terminal device and/or the terminal device are/is authenticated. The transceiver module 11 is further configured to: when the edge enabler client and/or the terminal device are/is not authenticated, receive a sixth request message from the edge application server, where the sixth request message is used to obtain an identifier of the terminal device, and the sixth request message includes a public address and a port number of the terminal device.

In still another possible implementation, the transceiver module 11 is configured to receive a first request message from a terminal device, where the first request message is used to obtain an identifier of the terminal device, and the first request message includes a first private address of the terminal device. The processing module 12 is configured to determine whether an edge enabler client of the terminal device and/or the terminal device are/is authenticated. The processing module 12 is configured to: when the edge enabler client and/or the terminal device are/is not authenticated, obtain a public address and a port number of the terminal device, and obtain the identifier of the terminal device based on the public address and the port number.

When the apparatus 6 is configured to perform the method in FIG. 3, the transceiver module 11 may be configured to perform steps of receiving and sending information in the method, for example, steps S630, S660, S692, S695, and S696; and the processing module 12 may be configured to perform a processing step in the method, for example, steps S640 and S650.

When the apparatus 10 is configured to perform the method in FIG. 7(b), the transceiver module 11 may be configured to perform steps of receiving and sending information in the method, for example, steps S703, S710, S714, S719, S723, S7293, and S7294; and the processing module 12 may be configured to perform a processing step in the method.

When the apparatus 10 is configured to perform the method in FIG. 8A and FIG. 8B, the transceiver module 11 may be configured to perform steps of receiving and sending information in the method, for example, steps S830, S811, S816, S821, S8291, and S850; and the processing module 12 may be configured to perform a processing step in the method, for example, step S840.

It should be understood that a specific process in which the units perform the foregoing corresponding steps has been described in detail in the foregoing method embodiments, and for brevity, details are not described herein again.

In another design, the apparatus 10 may correspond to the NEF in the foregoing method embodiments, or may be a component (for example, a chip) of the NEF.

The apparatus 10 may implement corresponding steps or procedures performed by the NEF in the foregoing method embodiments. The transceiver module 11 may be configured to perform receiving and sending-related operations of the NEF in the foregoing method embodiments, and the processing module 12 may be configured to perform processing-related operations of the NEF in the foregoing method embodiments.

In a possible implementation, the transceiver module 11 is configured to receive a second request message from an edge enabler server, where the second request message is used to obtain an identifier of a terminal device, and the second request message includes a first private address of the terminal device, and a public address and a port number of the terminal device; and the transceiver module 11 is configured to: when determining, based on the public address and the port number, that the first private address is valid, obtain the identifier of the terminal device, and send the identifier of the terminal device to the edge enabler server.

When the apparatus 10 is configured to perform the method in FIG. 6A and FIG. 6B, the transceiver module 11 may be configured to perform steps of receiving and sending information in the method, for example, steps S660, S670, S680, S611, S612, S621, S622, S624, S625, S631, S633, S690, S691, S692, S693, S694, and S695; and the processing module 12 may be configured to perform a processing step in the method, for example, steps S613 and S623.

When the apparatus 10 is configured to perform the method in FIG. 7(b), the transceiver module 11 may be configured to perform steps of receiving and sending information in the method, for example, steps S714, S715, S716, S717, S718, S719, S723, S724, S725, S726, S727, S728, S729, S7291, S7292, and S7293; and the processing module 12 may be configured to perform a processing step in the method.

When the apparatus 10 is configured to perform the method in FIG. 8A and FIG. 8B, the transceiver module 11 may be configured to perform steps of receiving and sending information in the method, for example, steps S811, S812, S813, S814, S815, S816, S821, S822, S823, S824, S825, S826, S827, S828, S829, and S8291; and the processing module 12 may be configured to perform a processing step in the method.

It should be understood that a specific process in which the units perform the foregoing corresponding steps has been described in detail in the foregoing method embodiments, and for brevity, details are not described herein again.

In another design, the apparatus 10 may correspond to the UPF in the foregoing method embodiments, or may be a component (for example, a chip) of the UPF.

The apparatus 10 may implement corresponding steps or procedures performed by the UPF in the foregoing method embodiments. The transceiver module 11 may be configured to perform receiving and sending-related operations of the UPF in the foregoing method embodiments, and the processing module 12 may be configured to perform processing-related operations of the UPF in the foregoing method embodiments.

In a possible implementation, the transceiver module 11 is configured to receive a third request message from a network exposure function network element, where the third request message is used to obtain a second private internet protocol address of a terminal device, and the third request message includes a public address and a port number of the terminal device; the processing module 12 is configured to determine a second private address of the terminal device based on the public address and the port number; and the transceiver module 11 is configured to send a third response message to the network exposure function network element, where the third response message includes the second private address.

In another possible implementation, the transceiver module 11 is configured to receive a fourth request message from a network exposure function network element, where the fourth request message includes a first public internet protocol address of a terminal device; the processing module 12 is configured to determine, based on the public address, at least one private address corresponding to the public address and a port number corresponding to the at least one private address; and the transceiver module 11 is configured to send a fourth response message to the network exposure function network element, where the fourth response message includes the at least one private address corresponding to the public address and the port number corresponding to the at least one private address.

In still another possible implementation, the transceiver module 11 is configured to receive a fifth request message from a network exposure function network element, where the fifth request message includes a first private internet protocol address of a terminal device, and a public address and a port number of the terminal device, and the fifth request message is used to request a user plane function network element to determine whether the first private address is valid; the processing module 12 is configured to determine whether the first private address is valid based on a correspondence between a private address and a public address and a port number that are locally stored; and the transceiver module 11 is configured to send a fifth response message to the network exposure function network element, where the fifth response message indicates whether the first private address is valid.

When the apparatus 10 is configured to perform the method in FIG. 6A and FIG. 6B, the transceiver module 11 may be configured to perform steps of receiving and sending information in the method, for example, steps S611, S612, S621, S622, S624, S625, S631, and S633; and the processing module 12 may be configured to perform a processing step in the method, for example, step S632.

When the apparatus 10 is configured to perform the method in FIG. 7(b), the transceiver module 11 may be configured to perform steps of receiving and sending information in the method, for example, steps S726 and S727; and the processing module 12 may be configured to perform a processing step in the method.

When the apparatus 10 is configured to perform the method in FIG. 8A and FIG. 8B, the transceiver module 11 may be configured to perform steps of receiving and sending information in the method, for example, steps S824 and S825; and the processing module 12 may be configured to perform a processing step in the method.

It should be understood that a specific process in which the units perform the foregoing corresponding steps has been described in detail in the foregoing method embodiments, and for brevity, details are not described herein again.

In another design, the apparatus 10 may correspond to the EAS in the foregoing method embodiments, or may be a component (for example, a chip) of the EAS.

The apparatus 10 may implement corresponding steps or procedures performed by the EAS in the foregoing method embodiments. The transceiver module 11 may be configured to perform receiving and sending-related operations of the EAS in the foregoing method embodiments, and the processing module 12 may be configured to perform processing-related operations of the EAS in the foregoing method embodiments.

In a possible implementation, the transceiver module 11 is configured to receive second indication information from an edge enabler server, where the second indication information indicates whether an edge enabler client in a terminal device and/or the terminal device are/is authenticated; and the transceiver module 11 is configured to: when the edge enabler client and/or the terminal device are/is not authenticated, send a sixth request message to the edge enabler server, where the sixth request message is used to obtain an identifier of the terminal device, and the sixth request message includes a public address and a port number of the terminal device.

When the apparatus 10 is configured to perform the method in FIG. 6A and FIG. 6B, the transceiver module 11 may be configured to perform steps of receiving and sending information in the method, for example, steps S610 and S698; and the processing module 12 may be configured to perform a processing step in the method.

When the apparatus 10 is configured to perform the method in FIG. 7(b), the transceiver module 11 may be configured to perform steps of receiving and sending information in the method, for example, steps S711, S7193, S703, S710, S722, and S7294; and the processing module 12 may be configured to perform a processing step in the method, for example, steps S720 and S721.

When the apparatus 10 is configured to perform the method in FIG. 8A and FIG. 8B, the transceiver module 11 may be configured to perform steps of receiving and sending information in the method, for example, steps S810 and S870; and the processing module 12 may be configured to perform a processing step in the method.

It should be understood that a specific process in which the units perform the foregoing corresponding steps has been described in detail in the foregoing method embodiments, and for brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by a device (for example, the terminal device or the network device) in the foregoing methods. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 10 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 10, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 10, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the EES in the foregoing method embodiments.

In another solution, the apparatus 20 is configured to implement operations performed by the NEF in the foregoing method embodiments.

In another solution, the apparatus 20 is configured to implement operations performed by the UPF in the foregoing method embodiments.

In another solution, the apparatus 20 is configured to implement operations performed by the EAS in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 11 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the EES, the EAS, the NEF, or the UPF in the foregoing method embodiments.

For example, the logic circuit 31 is configured to implement processing-related operations performed by the EES, the EAS, the NEF, or the UPF in the foregoing method embodiments; and the input/output interface 32 is configured to implement sending and/or receiving-related operations performed by the EES, the EAS, the NEF, or the UPF in the foregoing method embodiments.

An embodiment of this application further provides a computer-readable storage medium. The computer-readable storage medium stores computer instructions used to implement the method performed by the EES, the EAS, the NEF, or the UPF in the foregoing method embodiments.

For example, when the computer instructions are executed by a computer, the computer is enabled to implement the method performed by the EES, the EAS, the NEF, or the UPF in the foregoing method embodiments.

An embodiment of this application further provides a computer program product, including instructions. When the instructions are executed by a computer, the method performed by the EES, the EAS, the NEF, or the UPF in the method embodiments is implemented.

An embodiment of this application further provides a communication system, including the EES, the EAS, the NEF, and the UPF described above.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, the procedures or the functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first request message from a terminal device, wherein the first request message is used to obtain an identifier of the terminal device, and the first request message comprises a first private address of the terminal device;
obtaining a public address and a port number of the terminal device, and sending a second request message to a network exposure function network element, wherein the second request message is used to obtain the identifier of the terminal device, and the second request message comprises the first private address, the public address, and the port number; and
receiving first indication information or the identifier of the terminal device from the network exposure function network element, wherein the first indication information indicates failing to obtain the identifier of the terminal device.

2. The method according to claim 1, wherein receiving the first request message from the terminal device comprises:
receiving an internet protocol IP data packet from a user plane function network element, wherein a payload part of the IP data packet comprises the first request message from the terminal device; and
obtaining the public address and the port number comprises:
determining the public address and the port number based on a source address and a source port number of the IP data packet, wherein the source address represents the public address, and the source port number represents the port number.

3. The method according to claim 1, wherein obtaining the public address and the port number comprises: obtaining the public address and the port number from an edge application server.

4. The method according to any one of claims 1 to 3, wherein when the first indication information for the terminal device is received from the network exposure function network element, the method further comprises:
receiving a cause value for the terminal device from the network exposure function network element, wherein the cause value indicates a cause for failing to obtain the identifier of the terminal device.

5. The method according to any one of claims 1 to 4, wherein when the identifier of the terminal device is received from the network exposure function network element, the method further comprises:
sending a first response message to the terminal device, wherein the first response message comprises the identifier of the terminal device.

6. The method according to any one of claims 1 to 5, wherein sending the second request message to the network exposure function network element comprises:
sending the second request message to the network exposure function network element when the terminal device or an edge enabler client in the terminal device is not authenticated.

7. A communication method, comprising:
receiving a second request message from an edge enabler server, wherein the second request message is used to obtain an identifier of a terminal device, and the second request message comprises a first private address of the terminal device, and a public address and a port number of the terminal device; and
when determining, based on the public address and the port number, that the first private address is valid, obtaining the identifier of the terminal device, and sending the identifier of the terminal device to the edge enabler server.

8. The method according to claim 7, wherein when determining, based on the public address and the port number, that the first private address is invalid, first indication information is sent to the edge enabler server, and the first indication information indicates failing to obtain the identifier of the terminal device.

9. The method according to claim 7 or 8, wherein the method further comprises:
determining, based on the public address and the port number, whether the first private address is valid.

10. The method according to claim 9, wherein determining, based on the public address and the port number, whether the first private address is valid comprises:
determining whether the first private address is the same as a second private address, wherein the second private address is determined based on the public address and the port number.

11. The method according to claim 10, wherein the method further comprises:
sending a third request message to a user plane function network element, wherein the third request message comprises the public address and the port number; and
receiving a third response message from the user plane function network element, wherein the third response message comprises the second private address.

12. The method according to claim 10, wherein the method further comprises:
obtaining at least one private address corresponding to the public address and a port number corresponding to the at least one private address; and
obtaining the second private address based on the at least one private address and the port number corresponding to the at least one private address that are obtained, and the port number in the second request message.

13. The method according to claim 12, wherein the method further comprises:
sending a fourth request message to a user plane function network element, wherein the fourth request message comprises the public address; and
receiving a fourth response message from the user plane function network element, wherein the fourth response message comprises the at least one private address corresponding to the public address and the port number corresponding to the at least one private address.

14. The method according to claim 12, wherein the method further comprises:
sending a subscription request message to a user plane function network element, wherein the subscription request message comprises the public address; and
receiving one or more subscription response messages from the user plane function network element, wherein the one or more subscription response messages comprise the at least one private address corresponding to the public address and the port number corresponding to the at least one private address.

15. The method according to claim 13 or 14, wherein the method further comprises:
finding that the at least one private address corresponding to the public address and the port number corresponding to the at least one private address are not locally stored.

16. The method according to any one of claims 13 to 15, wherein the method further comprises:
if the at least one private address does not comprise the first private address, determining that the first private address is invalid; or
if the at least one private address comprises the first private address, and a port number corresponding to the first private address is the same as the port number, determining that the first private address is valid.

17. The method according to claim 9, wherein determining, based on the public address and the port number, whether the first private address is valid comprises:
sending a fifth request message to a user plane function network element, wherein the fifth request message comprises the first private address, the public address, and the port number, and the fifth request message is used to request the user plane function network element to determine whether the first private address is valid; and
receiving a fifth response message from the user plane function network element, wherein the fifth response message indicates whether the first private address is valid.

18. The method according to any one of claims 7 to 17, wherein the method further comprises:
sending a discovery request message to a network function repository function network element, wherein the discovery request message comprises the public address, and the discovery request message is used to obtain an address of a user plane function network element implementing an address translation function; and
receiving a discovery response message from the network function repository function network element, wherein the discovery response message comprises the address of the user plane function network element.

19. The method according to claim 8, wherein when the first indication information is sent to the edge enabler server, the method further comprises:
sending a cause value to the edge enabler server, wherein the cause value indicates a cause for failing to obtain the identifier of the terminal device.

20. A communication method, comprising:
receiving a third request message from a network exposure function network element, wherein the third request message is used to obtain a second private internet protocol address of a terminal device, and the third request message comprises a public address and a port number of the terminal device;
determining a second private address of the terminal device based on the public address and the port number; and
sending a third response message to the network exposure function network element, wherein the third response message comprises the second private address.

21. A communication method, comprising:
receiving a fourth request message from a network exposure function network element, wherein the fourth request message comprises a first public internet protocol address of a terminal device;
determining, based on the public address, at least one private address corresponding to the public address and a port number corresponding to the at least one private address; and
sending a fourth response message to the network exposure function network element, wherein the fourth response message comprises the at least one private address corresponding to the public address and the port number corresponding to the at least one private address.

22. A communication method, comprising:
receiving a subscription request message from the network exposure function network element, wherein the subscription request message comprises a first public internet protocol address of a terminal device; and
sending one or more subscription response messages to the network exposure function network element, wherein the one or more subscription response messages comprise at least one private address corresponding to the public address and a port number corresponding to the at least one private address.

23. A communication method, comprising:
receiving a fifth request message from a network exposure function network element, wherein the fifth request message comprises a first private internet protocol address of a terminal device, and a public address and a port number of the terminal device, and the fifth request message is used to request the user plane function network element to determine whether the first private address is valid;
determining whether the first private address is valid based on a correspondence between a private address and a public address and a port number that are locally stored; and
sending a fifth response message to the network exposure function network element, wherein the fifth response message indicates whether the first private address is valid.

24. The method according to claim 23, wherein determining whether the first private address is valid based on the correspondence between the private address and the public address and the port number that are locally stored comprises:
determining, based on the correspondence and the first private address, a public address and a port number that correspond to the first private address, wherein
if the public address and the port number that correspond to the first private address are the same as the public address and the port number, the fifth response message indicates that the first private address is valid; or if the public address and the port number that correspond to the first private address are not the same as the public address and the port number, the fifth response message indicates that the first private address is invalid.

25. The method according to claim 23, wherein determining whether the first private address is valid based on the correspondence between the private address, the public address and the port number that are locally stored comprises:
if determining, based on the correspondence and the first private address, that a public address and a port number that correspond to the first private address fail to be obtained, the fifth response message indicates that the first private address is invalid.

26. The method according to claim 23, wherein determining whether the first private address is valid based on the correspondence between the private address, the public address and the port number that are locally stored comprises:
determining, based on the correspondence, the public address, and the port number, a private address that corresponds to the public address and the port number, wherein
if the private address that corresponds to the public address and the port number is the same as the first private address and the port number, the fifth response message indicates that the first private address is valid; or if the private address that corresponds to the public address and the port number is not the same as the first private address and the port number, the fifth response message indicates that the first private address is invalid.

27. A communication system, comprising an edge enabler server and a network exposure function network element, wherein
the edge enabler server is configured to receive a first request message from a terminal device, wherein the first request message is used to obtain an identifier of the terminal device, and the first request message comprises a first private address of the terminal device;
the edge enabler server is further configured to obtain a public address and a port number of the terminal device;
the edge enabler server is further configured to send a second request message to the network exposure function network element, wherein the second request message is used to obtain the identifier of the terminal device, and the second request message comprises the first private address, the public address, and the port number; and
when determining, based on the public address and the port number, that the first private address is valid, the network exposure function network element is configured to send the identifier of the terminal device to the edge enabler server.

28. The system according to claim 27, wherein when determining, based on the public address and the port number, that the first private address is invalid, the network exposure function network element is further configured to send first indication information to the edge enabler server, wherein the first indication information indicates failing to obtain the identifier of the communication apparatus.

29. A communication apparatus, wherein the apparatus comprises units configured to perform the method according to any one of claims 1 to 6.

30. A communication apparatus, wherein the apparatus comprises units configured to perform the method according to any one of claims 7 to 19.

31. A communication apparatus, wherein the apparatus comprises units configured to perform the method according to any one of claims 20 to 26.

32. A communication apparatus, comprising:
a memory, configured to store a computer program; and
a processor, configured to execute the computer program stored in the memory, to cause the communication apparatus to perform the method according to any one of claims 1 to 26.

33. A computer-readable storage medium, wherein the computer-readable storage medium stores computer instructions, and when the computer instructions are run on a computer, the method according to any one of claims 1 to 26 is performed.

34. A computer program product, wherein the computer program product comprises instructions used to perform the steps performed by the repository function network element in the method according to any one of claims 1 to 26.
